# EUROPEAN PATENT APPLICATION

(11) **EP 4 654 489 A1**
(43) Date of publication of application: **26.11.2025**
(21) Application number: 24829990.1
(22) Date of filing: 20.03.2024
(51) Int. Cl.: H04B 7/08

(54) **ANTENNA SWITCHING METHOD, WIRELESS NETWORK CARD, AND ANTENNA SWITCHING APPARATUS**

(30) Priority: 27.06.2023 CN 202310762309
(71) Applicant: Honor Device Co., Ltd., Shenzhen, Guangdong 518040 (CN)
(72) Inventor: LI, Zhongjin, Shenzhen, Guangdong 518040 (CN); HU, Yiwu, Shenzhen, Guangdong 518040 (CN); CHU, Shaojie, Shenzhen, Guangdong 518040 (CN); LI, Xiaorui, Shenzhen, Guangdong 518040 (CN); WANG, Mu, Shenzhen, Guangdong 518040 (CN)
(74) Representative: Thun, Clemens
(86) International application number: PCT/CN2024/082825
(87) International publication number: WO 2025/001337

(57) **Abstract**

Embodiments of this application provide an antenna switching method, a wireless network interface controller, and an antenna switching apparatus, and relate to the field of communication technologies. The method is used for performing switching control on antennas in the wireless network interface controller. The wireless network interface controller includes a wireless communication module, an antenna switching switch, and the antennas; and an antenna interface is disposed on the wireless communication module, and the antenna interface is configured to connect to the antennas, where the antenna switching switch is disposed on each antenna interface in at least one antenna interface, and the antenna switching switch is configured to switch a target antenna connected to the antenna interface. The antenna switching switch is indicated to separately connect to each antenna in the plurality of antennas when a preset condition is met, to obtain received signal strengths of the plurality of antennas. Then, the target antenna in the plurality of antennas can be determined based on the received signal strengths, and the switching switch is connected to the target antenna. In this way, an anti-interference capability and communication performance of wireless communication can be improved without changing the antenna interface.

## Description

This application claims priority to Chinese Patent Application No. 202310762309.3, filed with the China National Intellectual Property Administration on June 27, 2023 and entitled "ANTENNA SWITCHING METHOD, WIRELESS NETWORK INTERFACE CONTROLLER, AND ANTENNA SWITCHING APPARATUS", which is incorporated herein by reference in its entirety.

### TECHNICAL FIELD

This application relates to the field of communication technologies, and in particular, to an antenna switching method, a wireless network interface controller, and an antenna switching apparatus.

### BACKGROUND

Some electronic devices implement a communication function by using one or more antennas configured in a wireless network interface controller. With an increase of a quantity of antennas, a wireless signal receiving and sending capability of the wireless network interface controller is improved, and reliability and an anti-interference capability of the wireless network interface controller are also improved to some extent.

However, the increase of the quantity of antennas also leads to a cost increase of the wireless network interface controller. Therefore, by comprehensively considering the cost and the wireless signal sending and receiving capability, two antennas are usually configured in a wireless network interface controller that is usually used in a device such as a notebook computer or a desktop computer at present. Because the antennas have directionality of a radiation again, and coverage of wireless signal sending or receiving of the two antennas is limited, when the electronic device is placed in different states at a same position, a large difference exists between throughput representations of wireless network transmission. Currently, to ensure stability of communication performance, a wireless communication module with a larger quantity of antenna interfaces is usually used, to connect to more antennas. However, when the quantity of the antenna interfaces and the antennas of the wireless communication module is larger, a higher cost needs to be consumed.

### SUMMARY

In view of this, this application provides an antenna switching method, a wireless network interface controller, and an antenna switching apparatus. An antenna switching switch may be configured to switch a target antenna connected to an antenna interface of a wireless communication module, to ensure collaboration between a plurality of antennas when a cost increase amplitude is small, thereby improving a coverage rate of wireless signals, and also improving an anti-interference capability of the wireless network interface controller.

According to a first aspect, this application provides an antenna switching method. The method is used for performing switching control on antennas in a wireless network interface controller. The wireless network interface controller includes a wireless communication module, an antenna switching switch, and the antennas; and an antenna interface is disposed on the wireless communication module, and the antenna interface is configured to connect to the antennas, where the antenna switching switch is disposed on each antenna interface in at least one antenna interface, and the antenna switching switch is configured to switch a target antenna connected to the antenna interface. The antenna switching switch is indicated to separately connect to the plurality of antennas when a target application meets a preset condition, to obtain received signal strengths of the plurality of antennas. Then, the target antenna in the plurality of antennas is determined based on the received signal strengths; and the antenna switching switch is connected to the target antenna.

In some examples, at least one antenna interface is disposed on the wireless communication module.

In some examples, the antenna switching switch is disposed on each antenna interface in the at least one antenna interface of the wireless communication module, and the antenna switching switch is connected to the plurality of antennas. The antenna switching switch may switch the antenna interface to be connected to one target antenna, so that the wireless communication module can receive a wireless signal by using the target antenna.

In the foregoing implementation, the antenna switching switch is disposed in the wireless network interface controller to increase a quantity of antennas that can work. The antenna switching switch is used to switch the target antenna connected to the antenna interface, so that the wireless switching switch can be controlled to select a suitable antenna from the plurality of antennas based on the signal strengths of the plurality of antennas when a preset condition is met. In this way, the plurality of antennas collaborate, thereby effectively improving communication performance of the electronic device. For example, when one of the plurality of antennas is blocked in receiving and sending wireless signals, one antenna in the remaining antennas that can normally receive and send wireless signals can be switched to be connected to the wireless communication module, so that the anti-interference capability of the wireless network interface controller is improved. In this way, a communication effect similar to a communication effect when a quantity of antenna interfaces is increased can be achieved on the premise that the antenna interface is not changed or on the basis that the quantity of antenna interfaces of the wireless communication module included in the wireless network interface controller is small, to improve communication performance of the wireless network interface controller, and also ensure that a cost increase is small.

In a possible implementation of the first aspect, the plurality of antennas include a first antenna and a second antenna. In this case, when the target antenna in the plurality of antennas is determined based on the received signal strengths, a size relationship between a first received signal strength of the first antenna and a second received signal strength of the second antenna may be first determined. If the first received signal strength is greater than the second received signal strength, the first antenna may be determined as the target antenna; or if the first received signal strength is less than the second received signal strength, the second antenna may be determined as the target antenna.

In some examples, a difference between the first received signal strength and the second received signal strength may be calculated to determine the size relationship between the first received signal strength and the second received signal strength. If the difference is greater than 0, it may indicate that the first received signal strength is stronger, and the first antenna may be determined as the target antenna. If the difference is less than 0, it may indicate that the second received signal strength is stronger, and the second antenna is determined as the target antenna.

In a possible implementation of the first aspect, received signal strengths of the first antenna and the second antenna may further be obtained for a plurality of times. Values of the obtained plurality of groups of received signal strengths are separately compared, and then the target antenna is determined based on a comparison result. If the comparison result indicates that the first received signal strength is greater than the second received signal strength for a plurality of times, the first antenna may be determined as the target antenna; or if the comparison result indicates that the first received signal strength is less than the second received signal strength for a plurality of times, the second antenna may be determined as the target antenna. In some examples, a plurality of differences are calculated based on each group of received signal strengths. The first antenna is determined as the target antenna in response to that the difference is greater than 0 for the m^{th} time, where m is a positive integer. The second antenna is determined as the target antenna in response to that the difference is less than 0 for the m^{th} time.

In the foregoing implementation, by comparing the first received signal strength with the second received signal strength for a plurality of times, the comparison result can be accurately obtained, so as to accurately determine the target antenna.

In another possible implementation of the first aspect, the plurality of antennas include a first antenna and a second antenna. In this case, when the target antenna in the plurality of antennas is determined based on the received signal strengths, an antenna currently connected to the antenna switching switch may be determined as the target antenna based on an absolute value of a difference between a first received signal strength of the first antenna and a second received signal strength of the second antenna. In some examples, if the absolute value of the difference between the first received signal strength and the second received signal strength is less than a first preset threshold, the antenna currently connected to the antenna switching switch is determined as the target antenna, and a connection with the target antenna is kept within first preset duration.

In the foregoing process, a gap between signal receiving capabilities of the two antennas can be learned based on the absolute value of the difference. If the difference between the two is not excessively large, it may be considered that the antenna with the larger received signal strength has a better received signal strength in a short term, but a probability that the received signal strength of the antenna becomes smaller is high. In this way, the antenna switching switch may be controlled to switch a connection to the target antenna, and keep the connection for a short period of time, thereby improving performance of wireless communication. If the difference between the two is small, the antenna switching switch may be controlled to keep a connection with the currently connected antenna, and keep the connection for a short period of time. In this way, a steady state of wireless communication can be kept without switching the antenna.

In a possible implementation of the first aspect, when the antenna switching switch is controlled to be connected to the target antenna, a freezing time of the antenna switching switch and whether the antenna switching switch needs to switch to the target antenna may be further determined based on the absolute value of the difference. In some examples, in response to that the absolute value of the difference is greater than or equal to a second preset threshold, the antenna switching switch may be controlled to switch a connection to the target antenna, and the connection with the target antenna is kept within second preset duration. In response to that the absolute value of the difference is less than the second preset threshold, and the absolute value of the difference is greater than or equal to the first preset threshold, the antenna switching switch may be controlled to switch a connection to the target antenna, and the connection with the target antenna is kept within third preset duration. The second preset duration is greater than the third preset duration.

In the foregoing implementation, duration for which the antenna switching switch keeps the connection with the target antenna after switching the connection to the target antenna may be determined based on the difference between the first signal strength and the second signal strength. If the absolute value of the difference is greater than or equal to the second preset threshold, it indicates that the received signal strength of the target antenna is far greater than the received signal strength of the other antenna. In this case, the antenna switching switch may be controlled to keep the connection with the target antenna for a long time, to improve stability of wireless communication of the wireless network interface controller. If the absolute value of the difference is less than the second preset threshold, and the absolute value of the difference is greater than or equal to the first preset threshold, it indicates that the received signal strength of the target antenna is greater than the received signal strength of the other antenna, but the difference is not large. In this case, the antenna switching switch may be controlled to keep the connection with the target antenna for a short time, to determine, in real, whether antenna switching needs to be performed, thereby ensuring high wireless communication performance of the wireless network interface controller.

In a possible implementation of the first aspect, the wireless communication module is configured to measure and output a received signal strength of the antenna connected to the antenna switching switch. In this case, the wireless communication module may be indicated to measure the received signal strength of the antenna connected to the antenna switching switch, to measure the received signal strength of each antenna connected to the antenna switching switch.

In some examples, chip firmware may be configured in the wireless communication module, so that the wireless communication module can measure the received signal strength of each antenna. For example, a program for implementing a function of measuring the received signal strength of each antenna is burnt in the wireless communication module, so that the wireless communication module implements a function of measuring and outputting the received signal strength of each antenna.

In the foregoing implementation, the wireless communication module in the wireless network interface controller may directly measure the received signal strength of each antenna accurately, to improve accuracy and efficiency of measuring the received signal strengths of the antennas, thereby performing accurate and rapid control on the antenna switching switch based on a measurement result.

In a possible implementation of the first aspect, when the wireless communication module in the wireless network interface controller is indicated to measure the received signal strength of the antenna connected to the antenna switching switch, the wireless communication module may be indicated to measure the received signal strength of the antenna connected to the antenna switching switch within fourth preset duration. The received signal strength measured within the fourth preset duration has stability, and therefore, it can be ensured that the received signal strength of the antenna is accurately measured.

In a possible implementation of the first aspect, the preset condition includes one or more of the following: a running state of a target application is freezing, a network latency of the target application is greater than a preset latency threshold, and the target application is in a started state.

In another possible implementation of the first aspect, the antenna switching method is applied to a controller, and the controller is connected to the wireless network interface controller. The controller may perform switching control on the antenna switching switch based on the received signal strengths of the plurality of antennas; and the controller includes a wireless transmitting antenna selection WiTAS module. In the antenna switching method, it may be determined, by using the WiTAS module in a first state, whether a current case meets the preset condition. The WiTAS module changes from the first state to a second state in response to that the current case meets the preset condition. It is determined, by using the WiTAS module in the second state, whether the current case meets the preset condition, and the antenna switching switch is indicated to separately connect to the plurality of antennas, to obtain the received signal strengths of the plurality of antennas. Then, it may be determined, by using the WiTAS module in the second state, the target antenna in the plurality of antennas based on the received signal strengths. The WiTAS module changes from the second state to a third state in response to that the current case meets the preset condition and that the target antenna has been determined, and the WiTAS module in the third state is used to connect the antenna switching switch to the target antenna.

In some examples, the controller to which the antenna switching method is applied may be a central processing unit, or may be the electronic device.

In the foregoing implementation process, the controller includes the wireless transmitting antenna selection WiTAS module. The controller may determine, by using the WiTAS module in the first state, whether the current case meets the preset condition. If determining, by using the WiTAS module in the first state, that the current case meets the preset condition, the controller controls the WiTAS module to change from the first state to the second state. The WiTAS module in the second state determines whether the current case meets the preset condition, and indicates the antenna switching switch to separately connect to the plurality of antennas, to obtain the received signal strengths of the plurality of antennas, and determines the target antenna in the plurality of antennas based on the received signal strengths. If the WiTAS module in the second state determines that the current case meets the preset condition, and determines the target antenna, the WiTAS module is controlled to change from the second state to the third state. The controller connects, by using the WiTAS module in the third state, the antenna switching switch to the target antenna.

In a possible implementation of the first aspect, if the WiTAS module in the second state determines that the current case does not meet the preset condition, the WiTAS module is controlled to change from the second state to the first state.

In a possible implementation of the first aspect, after connecting, by using the WiTAS module in the third state, the antenna switching switch to the target antenna, the controller determines, by using the WiTAS module in the third state, whether the current case meets the preset condition. If the WiTAS module in the third state determines that the current case meets the preset condition, the controller controls the WiTAS module to change from the third state to the second state.

In a possible implementation of the first aspect, after connecting, by using the WiTAS module in the third state, the antenna switching switch to the target antenna, the controller determines, by using the WiTAS module in the third state, whether the current case meets the preset condition. If the WiTAS module in the third state cannot determine whether the current case meets the preset condition, the controller controls the WiTAS module to change from the third state to the first state.

In a possible implementation of the first aspect, after connecting, by using the WiTAS module in the third state, the antenna switching switch to the target antenna, the controller determines, by using the WiTAS module in the third state, whether the current case meets the preset condition. If the WiTAS module in the third state determines that the current case does not meet the preset condition, the controller controls the WiTAS module to keep the third state.

According to a second aspect, this application provides a wireless network interface controller, including: a wireless communication module, an antenna switching switch, and antennas. An antenna interface is disposed on the wireless communication module of the wireless network interface controller, and the antenna interface is configured to connect to the antennas. The antenna switching switch is disposed on each antenna interface in at least one antenna interface, and the antenna switching switch is configured to switch a target antenna connected to the antenna interface. The target antenna is determined based on received signal strengths of all antennas connected to the antenna switching switch.

In the foregoing implementation, the antenna switching switch is disposed in the wireless network interface controller to increase a quantity of antennas that can work. After the target antenna is determined based on the received signal strength of each antenna, the antenna switching switch may be used to switch the target antenna connected to the antenna interface, to switch a working antenna, thereby enabling a plurality of antennas to collaborate. When one of the plurality of antennas is blocked in receiving and sending wireless signals, one antenna in the remaining antennas that can normally receive and send wireless signals can be switched to be connected to the wireless communication module, so that the anti-interference capability of the wireless network interface controller is improved. In this way, a communication effect similar to a communication effect when a quantity of antenna interfaces is increased can be achieved on the premise that the antenna interface is not changed, to improve communication performance of the wireless network interface controller, and also ensure that a cost increase is small.

In a possible implementation of the second aspect, the wireless communication module is configured to measure and output a received signal strength of each antenna connected to the antenna switching switch.

In the foregoing implementation, the wireless communication module in the wireless network interface controller may directly measure the received signal strength of each antenna accurately, to improve accuracy and efficiency of measuring the received signal strengths of the antennas, thereby performing accurate and rapid control on the antenna switching switch based on a measurement result.

In a possible implementation of the second aspect, a radiation type of the antenna is a directional antenna or an omnidirectional antenna, where the radiation type of the antenna may be selected based on different requirements.

According to a third aspect, this application provides a wireless network interface controller, including: a wireless communication module, an antenna switching switch, and antennas. An antenna interface is disposed on the wireless communication module of the wireless network interface controller, and the antenna interface is configured to connect to the antennas. The antenna switching switch is disposed on each antenna interface in at least one antenna interface, and the antenna switching switch is configured to switch a target antenna connected to the antenna interface.

According to a fourth aspect, this application provides an antenna switching apparatus, where the antenna switching apparatus is configured to perform the method in the first aspect and any possible implementation of the first aspect.

According to a fifth aspect, this application provides an antenna switching apparatus, where the antenna switching apparatus includes a controller and the wireless network interface controller in the second aspect and any possible implementation of the second aspect.

According to a sixth aspect, this application provides an antenna switching apparatus, where the antenna switching apparatus includes a controller and the wireless network interface controller in a possible implementation of the third aspect.

According to a seventh aspect, this application provides an electronic device. The electronic device includes a processor and a memory, the memory is coupled to the processor, the memory is configured to store computer program code, the computer program code includes computer instructions, and when the processor reads the computer instructions from the memory, the electronic device is enabled to perform the method in the first aspect and any possible design manner of the first aspect.

When the processor executes the computer instructions, the electronic device is enabled to perform: indicating the antenna switching switch to separately connect to each antenna in the plurality of antennas when a preset condition is met, to obtain received signal strengths of the plurality of antennas; determining the target antenna in the plurality of antennas based on the received signal strengths; and connecting the antenna switching switch to the target antenna.

In a possible implementation of the seventh aspect, the plurality of antennas include a first antenna and a second antenna, and when the processor executes the computer instructions, the electronic device is enabled to perform: determining a size relationship between a first received signal strength of the first antenna and a second received signal strength of the second antenna; and determining the first antenna as the target antenna in response to that the first received signal strength is greater than the second received signal strength; or determining the second antenna as the target antenna in response to that the first received signal strength is less than the second received signal strength.

In a possible implementation of the seventh aspect, the plurality of antennas include a first antenna and a second antenna, and when the processor executes the computer instructions, the electronic device is enabled to perform: in response to that an absolute value of a difference between a first received signal strength and a second received signal strength is less than a first preset threshold, determining an antenna currently connected to the antenna switching switch as the target antenna, and keeping a connection with the target antenna within first preset duration.

In a possible implementation of the seventh aspect, when the processor executes the computer instructions, the electronic device is enabled to perform: connecting the antenna switching switch to the target antenna, including: in response to that the absolute value of the difference between the first received signal strength and the second received signal strength is greater than or equal to a second preset threshold, controlling the antenna switching switch to switch a connection to the target antenna, and keeping the connection with the target antenna within second preset duration; or in response to that the absolute value of the difference between the first received signal strength and the second received signal strength is less than the second preset threshold, and the absolute value of the difference is greater than or equal to the first preset threshold, controlling the antenna switching switch to switch a connection to the target antenna, and keeping the connection with the target antenna within third preset duration, where the second preset duration is greater than the third preset duration.

In a possible implementation of the seventh aspect, the wireless communication module in the wireless network interface controller is configured to measure and output a received signal strength of the antenna connected to the antenna switching switch.

In a possible implementation of the seventh aspect, the preset condition includes one or more of the following: a running state of a target application is freezing, a network latency of the target application is greater than a preset latency threshold, and the target application is in a started state.

In a possible implementation of the seventh aspect, the antenna switching method is applied to a controller, the controller is connected to the wireless network interface controller, and the controller is configured to perform switching control on the antenna switching switch based on the received signal strengths of the plurality of antennas; and the controller includes a wireless transmitting antenna selection WiTAS module. When the processor executes the computer instructions, the electronic device is enabled to perform: determining, by using the WiTAS module in a first state, whether a current case meets the preset condition; changing, by the WiTAS module, from the first state to a second state in response to that the current case meets the preset condition; determining, by using the WiTAS module in the second state, whether the current case meets the preset condition, and indicating the antenna switching switch to separately connect to the plurality of antennas, to obtain the received signal strengths of the plurality of antennas; determining, by using the WiTAS module in the second state, the target antenna in the plurality of antennas based on the received signal strengths; and changing, by the WiTAS module, from the second state to a third state in response to that the current case meets the preset condition and that the target antenna has been determined, and connecting, by using the WiTAS module in the third state, the antenna switching switch to the target antenna.

According to an eighth aspect, this application provides a computer-readable storage medium, including computer instructions. When the computer instructions are run on an electronic device, the electronic device is enabled to perform the method in the first aspect and any possible implementation of the first aspect.

According to a ninth aspect, this application provides a computer program product. When the computer program product is run on an electronic device, the electronic device is enabled to perform the method in the first aspect and any possible implementation of the first aspect.

According to a tenth aspect, this application provides an apparatus. The apparatus is included in an electronic device, and the apparatus has a function of implementing behavior of the electronic device in any method in the seventh aspect and the possible implementations of the seventh aspect. The function may be implemented by hardware, or may be implemented by hardware by executing corresponding software. The hardware or the software includes at least one module or unit corresponding to the function, for example, a processing module or unit, a transceiver module or unit, and a storage module or unit.

It may be understood that the foregoing electronic device in the seventh aspect and any possible design manner of the seventh aspect, the computer-readable storage medium in the eighth aspect, and the computer program product in the ninth aspect are all used to execute the foregoing corresponding method. Therefore, for beneficial effects that can be achieved by the electronic device, the computer-readable storage medium, and the computer program product, refer to the beneficial effects in the foregoing corresponding method, and details are not described herein again.

### BRIEF DESCRIPTION OF DRAWINGS

FIG. 1 is a diagram of coverage of an antenna according to an embodiment of this application;
FIG. 2 is a diagram of an electronic device according to an embodiment of this application;
FIG. 3 is a diagram of a structure of an electronic device according to an embodiment of this application;
FIG. 4 is a diagram of a structure of a wireless network interface controller according to an embodiment of this application;
FIG. 5 is a diagram of coverage of an antenna of a wireless network interface controller according to an embodiment of this application;
FIG. 6 is a diagram of coverage of an antenna of another wireless network interface controller according to an embodiment of this application;
FIG. 7 is a diagram of a structure of another wireless network interface controller according to an embodiment of this application;
FIG. 8 is a diagram of a structure of another wireless network interface controller according to an embodiment of this application;
FIG. 9 is a block diagram of a software structure of an electronic device according to an embodiment of this application;
FIG. 10 is a schematic flowchart of an antenna switching method according to an embodiment of this application;
FIG. 11 is a diagram of a connection between an electronic device and a wireless network interface controller according to an embodiment of this application;
FIG. 12 is a diagram of a WiTAS module according to an embodiment of this application;
FIG. 13 is a flow block diagram of an antenna switching method according to an embodiment of this application; and
FIG. 14 is a diagram of a structure of another electronic device according to an embodiment of this application.

### DESCRIPTION OF EMBODIMENTS

Hereinafter, the terms "first" and "second" are used only for descriptive purposes, and cannot be understood as indicating or implying relative importance or implicitly indicating a quantity of indicated technical features. Therefore, features defining "first" and "second" may explicitly or implicitly include one or more of the features. In the descriptions of embodiments, unless otherwise specified, "a plurality of" means two or more than two.

In production processes of electronic devices such as a notebook computer and a desktop computer, a mainboard and a wireless network interface controller are usually produced separately, and then assembled. A central processing unit (central processing unit, CPU) is disposed on the mainboard. The wireless network interface controller (wireless network interface controller, WNIC) is a terminal wireless network device. For example, the wireless network interface controller is a wireless communication module such as a WiFi module or a Bluetooth module provided with antennas. An electronic device such as the notebook computer or the desktop computer may implement a wireless network connection function, such as WiFi or Bluetooth, by using the wireless network interface controller.

In some examples, an antenna interface configured to connect to antennas is disposed on the WiFi module, and a wireless signal receiving function or a wireless signal sending function may be implemented by using the antennas. A wireless signal received by an antenna may be sent to the CPU by using the WiFi module, and the CPU may also send a wireless signal by using the antenna on the WiFi module.

The antennas may be classified based on different situations. For example, the antennas may be classified into a transmitting antenna, a receiving antenna, and a transmitting and receiving antenna based on working functions; or the antennas may be classified into an omnidirectional antenna, a directional antenna, and the like based on directionality of the antennas. Distribution of signal sending energy and signal receiving energy of the omnidirectional antenna in a same radiation plane is uniform, but signal sending energy and signal receiving energy of the directional antenna are concentrated in a particular direction. Therefore, when transmit powers of the antennas are the same, or signal fields in which the antennas are located are the same, a signal sending capability and a signal receiving capability of the directional antenna in a directional antenna radiation direction are stronger than those of the omnidirectional antenna. In other words, the directional antenna can implement wireless communication with a longer distance in a specified direction, and has a strong anti-interference capability. A position and direction at which the electronic device such as the notebook computer or the desktop computer receives a wireless signal are indeterminate. To ensure wireless communication performance of the electronic device, omnidirectional antennas are usually disposed in WiFi modules of notebook computers at present.

For example, in an actual application scenario, because antennas of the notebook computer are arranged inside the notebook computer, coverage of the antennas is blocked. In other words, in an actual application process of the antennas inside the notebook computer, there is a problem of radiation gain directionality. Consequently, when the notebook computer is placed at a same position at different angles, a throughput representation of wireless signal transmission has a big difference.

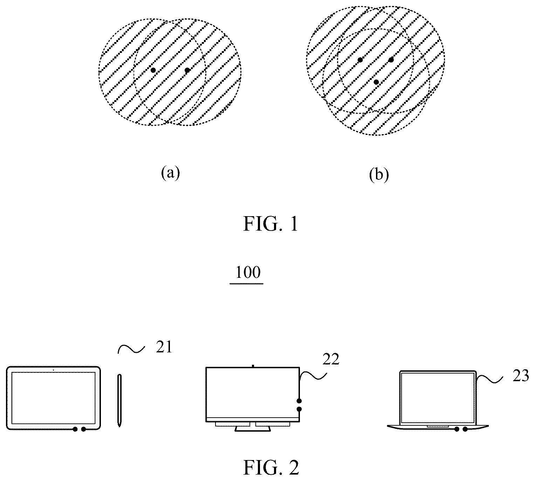

In some embodiments, one to three antenna interfaces are usually disposed on the WiFi module of the notebook computer. WiFi modules with more than three antenna interfaces are uncommon and have higher costs, and are not discussed herein temporarily. A WiFi module with one antenna interface can only connect to one antenna, and therefore, the WiFi module has a weak communication capability. The WiFi module with one antenna interface is common in early products of the notebook computer, and is uncommon in products of the current market. A WiFi module with two antenna interfaces may connect to two antennas, and a WiFi module with three antenna interfaces may connect to three antennas. Compared with two antennas working at the same time, three antennas working at the same time is equivalent to three layers of signal coverage, and therefore a coverage rate is higher and anti-interference performance is stronger, thereby ensuring stronger communication performance. (a) in FIG. 1 shows coverage of two antennas of the WiFi module, and (b) in FIG. 1 shows coverage of three antennas of the WiFi module. It can be learned that, the coverage of the three antennas is higher than that of the two antennas. Therefore, the notebook computer provided with three antennas has a stronger anti-interference capability for wireless signal receiving and sending, and therefore has better communication performance. For example, if a transmission function of one of the two antennas is affected by an object placed nearby, only one antenna is left for transmitting a wireless signal. If a transmission function of one of the three antennas is affected by an object placed nearby, two antennas are left for transmitting a wireless signal. In this way, transmission performance of the WiFi module with three antenna interfaces is better than that of the WiFi module with two antenna interfaces.

However, a cost of the WiFi module with three antenna interfaces is higher than that of the WiFi module with two antenna interfaces. Therefore, WiFi modules with two antenna interfaces are usually configured in electronic devices such as notebook computers at present.

It can be learned that for electronic devices such as notebook computers and desktop computers, it is difficult to ensure that a price remains unchanged or an increasing amplitude is small when performance of the product is improved.

Therefore, embodiments of this application provide an antenna switching method. An antenna switching switch is configured in a wireless network interface controller of an electronic device, and the wireless network interface controller increases a quantity of connectable antennas by using the antenna switching switch, to ensure a signal coverage rate of the wireless network interface controller. In this method, suitable antennas may also be selected by controlling the wireless switching switch in different cases, so that communication performance of the electronic device can be effectively improved. By using the wireless network interface controller and the antenna switching method provided in embodiments of this application, on the basis that a quantity of antenna interfaces of the wireless communication module included in the wireless network interface controller is small, the wireless communication module can be enabled to achieve same communication effect as a wireless communication module with a large quantity of antenna interfaces, to ensure that the product cost does not increase or an increasing amplitude is small when the communication effect is improved.

The wireless communication module may include, for example, a WiFi module, a Bluetooth communication module, and the like.

In the foregoing embodiment, a small quantity of antenna interfaces and a large quantity of antenna interfaces are relative terms. For example, two antenna interfaces are the small quantity of antenna interfaces relative to three antenna interfaces, and the three antenna interfaces are the large quantity of antenna interfaces relative to the two antenna interfaces. The quantity of antenna interfaces of the WiFi module is not specifically limited in embodiments of this application, and in different application scenarios, the WiFi module may be configured with more or fewer antenna interfaces.

The wireless network interface controller and the antenna switching method provided in embodiments of this application may be applied to an electronic device 100. For example, as shown in FIG. 2, the electronic device 100 may be specifically a terminal device with a wireless communication function, for example, a tablet computer 21, a smart screen 22, a notebook computer 23, an onboard device, a desktop computer, an ultra-mobile personal computer (ultra-mobile personal computer, UMPC), a netbook, a personal digital assistant (personal digital assistant, PDA), or an artificial intelligence (artificial intelligence, AI) device. An operating system installed on the electronic device 100 includes but is not limited to MAC OS^{®}, Windows^{®}, Unix^{®}, Linux^{®}, or another operating system. A specific type of and the operating system installed on the electronic device 100 are not limited in embodiments of this application.

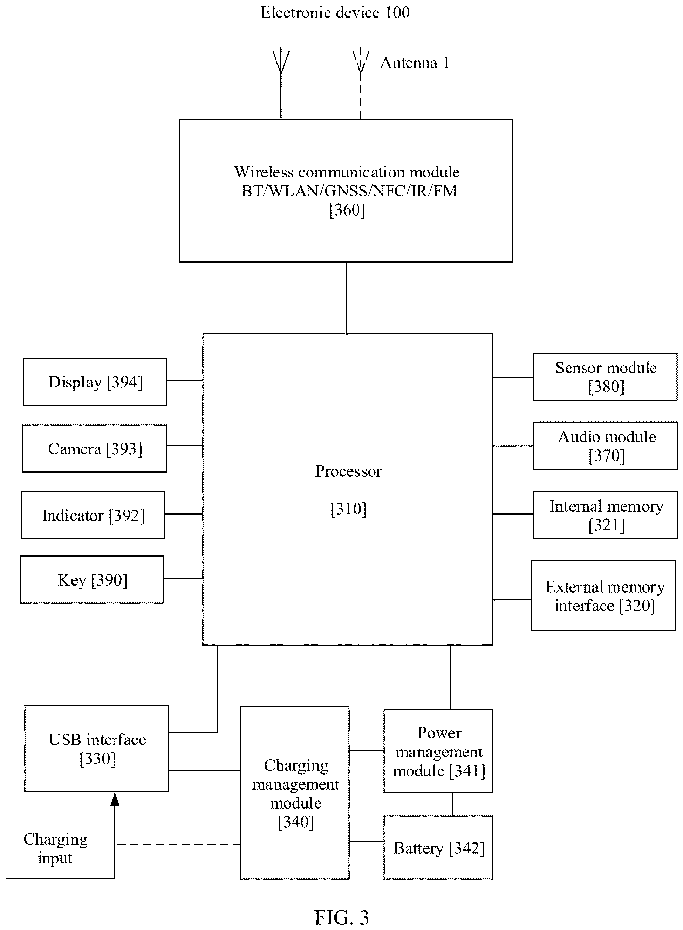

FIG. 3 is a diagram of a structure of the electronic device 100. The electronic device 100 may include a processor 310, an external memory interface 320, an internal memory 321, a universal serial bus (universal serial bus, USB) interface 330, a charging management module 340, a power management module 341, a battery 342, a wireless communication device 360, an audio module 370, a sensor module 380, a key 390, an indicator 392, a camera 393, a display 394, and the like.

It may be understood that the structure illustrated in embodiments of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated in one or more processors.

The controller may be a nerve center and a command center of the electronic device 100. The controller may generate an operation control signal based on instruction operation code and a timing signal, to control instruction fetching and instruction execution.

A memory may be further disposed in the processor 310, to store instructions and data. In some embodiments, the memory in processor 310 is a cache memory. The memory may store an instruction or data that is recently used or to be cyclically used by the processor 310. If the processor 310 needs to use the instruction or the data again, the processor 310 may directly invoke the instruction or the data from the memory. This avoids repeated access, and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like.

The GPIO interface may be configured by software. The GPIO interface may be configured as a control signal or a data signal. In some embodiments, the GPIO interface may be configured to connect the processor 310 and the camera 393, the display 394, the wireless communication device 360, the audio module 370, the sensor module 380, and the like. In some embodiments, the processor 310 communicates with the wireless communication device 360 by using the GPIO interface, to implement an antenna switching function of the electronic device 100.

The USB interface 330 is an interface that conforms to a USB standard specification, and may be specifically a Mini USB interface, a Micro USB interface, a USB Type C interface, or the like. The USB interface 330 may be configured to connect to a charger to charge the electronic device 100, or may be configured to transmit data between the electronic device 100 and a peripheral device. The USB interface 330 may alternatively be configured to connect to a headset, to play audio by using the headset. The interface may be further configured to connect to another electronic device such as an AR device.

It may be understood that the interface connection relationship between the modules that is shown in embodiments of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 340 is configured to receive a charging input from a charger. The charger may be a wireless charger or a wired charger. When the charging management module 340 charges the battery 342, the power management module 341 may further supply power to the electronic device.

The power management module 341 is configured to connect to the battery 342, the charging management module 340 and the processor 310. The power management module 341 receives an input from the battery 342 and/or the charging management module 340, and supplies power to the processor 310, the internal memory 321, an external memory, the display 394, the camera 393, the wireless communication device 360, and the like. In some other embodiments, the power management module 341 may alternatively be disposed in the processor 310. In some other embodiments, the power management module 341 and the charging management module 340 may alternatively be configured in a same device.

As shown in FIG. 3, a wireless communication function of the electronic device 100 may be implemented by using an antenna 1, the wireless communication device 360, the modem processor, the baseband processor, and the like.

The antenna 1 is configured to transmit and receive electromagnetic wave signals. Each antenna in the electronic device 100 may be configured to cover one or more communication bands. Different antennas may be further multiplexed, to improve antenna utilization. For example, the antenna 1 may be multiplexed as a diversity antenna in a wireless local area network. In some other embodiments, an antenna may be used in combination with a tuning switch.

The electronic device 100 implements a display function by using the GPU, the display 394, the application processor, and the like. The GPU is an image processing microprocessor and is connected to the display 394 and the application processor. The GPU is configured to perform mathematical and geometric calculation for graphics rendering. The processor 310 may include one or more GPUs, and the GPU executes a program instruction to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Miniled, a MicroLED, a Micro-OLED, a quantum dot light emitting diode (quantum dot light emitting diodes, QLED), or the like. In some embodiments, the electronic device 100 may include 1 or N displays 394, and N is a positive integer greater than 1.

The electronic device 100 may implement a shooting function by using the ISP, the camera 393, the video codec, the GPU, the display 394, the application processor, and the like.

The external memory interface 320 may be configured to be connected to an external storage card, for example, an SD card, to expand a storage capability of the electronic device 100. The external storage card communicates with the processor 310 by using the external memory interface 320, to implement a data storage function. For example, files such as music and a video are stored in the external storage card.

The internal memory 321 may be configured to store computer-executable program code. The computer-executable program code includes instructions. The processor 310 performs various function applications and data processing of the electronic device 100 by running the instructions stored in the internal memory 321. In addition, the internal memory 321 may include a high-speed random access memory, and may also include a non-volatile memory, such as at least one magnetic disk storage device, a flash memory device, and a universal flash storage (universal flash storage, UFS).

The key 390 includes a power button, a volume button, and the like. The key 390 may be a mechanical key, or may be a touch key. The indicator 392 may be an indicator light, and may indicate a charging status and a change in charge, or may indicate a message, a notification, and the like.

The wireless communication device 360, such as a wireless network interface controller, may provide a solution applied to the electronic device 100 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication device 360 may be one or more devices integrating at least one communication processing module. The wireless communication device 360 receives an electromagnetic wave by using the antenna 1, performs frequency modulation and filtering processing on the electromagnetic wave signal, and sends the processed signal to the processor 310. The wireless communication device 360 may further receive a to-be-sent signal from the processor 310, and perform frequency modulation and amplification on the signal. The amplified signal is converted into an electromagnetic wave and radiated out via the antenna 1.

In some embodiments, the antenna 1 and the wireless communication device 360 of the electronic device 100 are coupled to each other, so that the electronic device 100 can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation systems, SBAS).

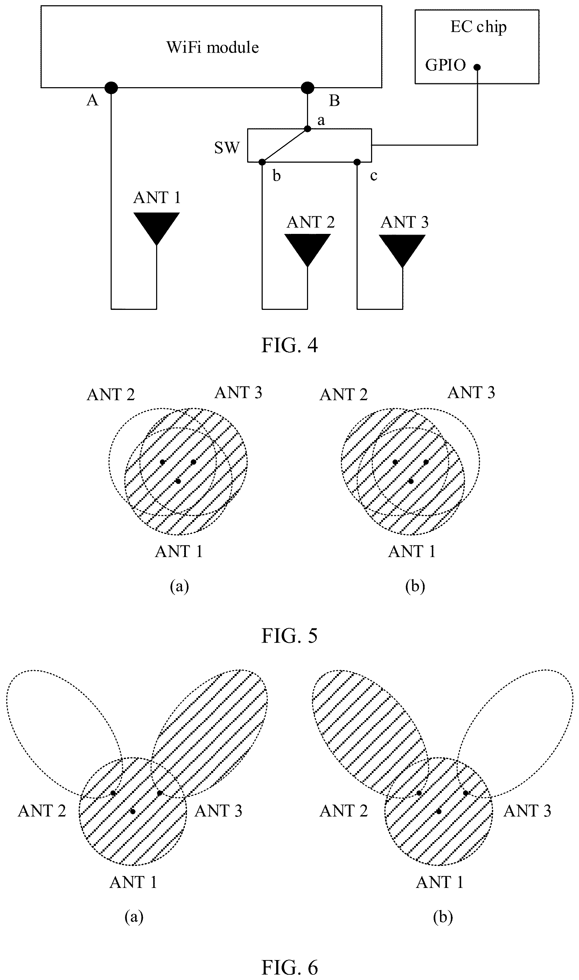

In some examples, a wireless communication module, for example, a WiFi module or a Bluetooth module, is equipped in the wireless communication device 360. The following is described by using the WiFi module as an example. One or more antenna interfaces configured to connect to antennas are configured on the WiFi module, to implement a wireless communication function of the wireless communication device 360 by using the antennas. It should be understood that, the antenna 1 shown in FIG. 3 includes a plurality of antennas connected to the WiFi module in the wireless network interface controller. For example, FIG. 4 is a diagram of a structure of a wireless network interface controller according to an embodiment of this application. As shown in FIG. 4, the wireless network interface controller includes a WiFi module. FIG. 4 uses a WiFi module including two antenna interfaces as an example. One antenna interface A of the WiFi module may be connected to one antenna ANT 1, and the other antenna interface B may be connected to a plurality of antennas by using an antenna switching switch SW. For example, the antenna switching switch SW is connected to two antennas (for example, including antennas ANT 2 and ANT 3). The antenna switching switch SW is further provided with a GPIO interface. The antenna switching switch SW may be controlled by using GPIO interface, to switch a connection between the WiFi module and the antenna ANT 2 and the antenna ANT 3.

For example, as shown in FIG. 4, a terminal a is connected to a terminal b of the antenna switching switch SW, and the WiFi module is connected to the antenna ANT 2. If a switching instruction A indicates the antenna switching switch SW to switch to connect the terminal a to a terminal c, when the GPIO interface receives the switching instruction A, the antenna switching switch SW may switch to a state in which the terminal a is connected to the terminal c, to ensure a connection between the WiFi module and the antenna ANT 3. If a switching instruction B indicates the antenna switching switch SW to switch to connect the terminal a to the terminal b, when the GPIO interface receives the switching instruction B, the antenna switching switch SW may switch to a state in which the terminal a is connected to the terminal b, to ensure a connection between the WiFi module and the antenna ANT 2. The antenna switching switch may be controlled based on the switching instruction received from the GPIO interface, to implement antenna switching.

In some examples, the GPIO interface connected to the antenna switching switch SW may be disposed in an embedded controller (embedded controller, EC) chip, and a CPU may control the antenna switching switch by using the EC chip. CPUs have different models, and CPUs of some models may not have GPIO interfaces or have no redundant GPIO interfaces. Therefore, by disposing the GPIO interface in the EC chip, it is ensured that the CPU can control the antenna switching switch SW by using the EC chip, to implement switching control on the antennas. In this way, applicability of the wireless network interface controller provided in embodiments of this application in different products is improved in the foregoing manner.

In some embodiments, a wireless signal coverage rate can be improved by using the wireless network interface controller provided in embodiments of this application. Coverage of the antennas of the wireless network interface controller in FIG. 4 is shown in FIG. 5. The terminal a is connected to the terminal c in the antenna switching switch SW. In this case, the antenna ANT 1 and the antenna ANT 3 are in working states, and their coverage is shown in the shading part in (a) in FIG. 5. The terminal a is connected to the terminal b in the antenna switching switch SW. In this case, the antenna ANT 1 and the antenna ANT 2 are in working states, and their coverage is shown in the shading part in (b) in FIG. 5. It can be learned from the foregoing that, in the wireless network interface controller shown in embodiments of this application, the antenna switching switch SW used for antenna switching is disposed on the antenna interface, so that when coverage of a particular antenna connected to the antenna interface is limited, the antenna switching switch can be used to enable the antenna interface to switch a connection to the other antenna, and normal work of the antenna interface is still ensured. In other words, it is ensured that the antenna interface is still connected to an antenna that normally works, and coverage of the antenna corresponding to the antenna interface is not reduced. In the coverage diagram shown in (a) in FIG. 1, after coverage of one antenna is limited, overall coverage of the antennas is also reduced. Therefore, the wireless network interface controller provided in embodiments of this application can increase the coverage rate of the antennas through antenna switching, to ensure that performance of wireless communication is improved when costs are close.

In some embodiments, the antenna ANT 1 shown in FIG. 4 may be an omnidirectional antenna, and the antenna ANT 2 and the antenna ANT 3 may be directional antennas. The omnidirectional antenna transmits signals in all directions, and signals may be transmitted or received all around the antenna. The directional antenna, and transmitting and receiving of the directional antenna are concentrated in a particular direction. Therefore, the antennas connected to the antenna switching switch SW are set to directional antennas, so that when communication in a particular direction has interference, the antenna switching switch SW can be used to switch different directional antennas to work, thereby improving the anti-interference capability of the wireless network interface controller.

It should be understood that the antenna ANT 1 may alternatively be set to a directional antenna, and some or all of the plurality of antennas connected to the antenna switching switch may alternatively be set to omnidirectional antennas. For example, the antenna ANT 2 and/or the antenna ANT 3 may alternatively be omnidirectional antennas. This is not limited in embodiments of this application.

For example, as shown in (a) and (b) in FIG. 6, in a particular horizontal plane, coverage of the omnidirectional antenna ANT 1 may be considered as a circle with a radius r, and coverage of the directional antenna ANT 2 and the directional antenna ANT 3 may be considered as an ellipse having directionality. Radiation energy of the omnidirectional antenna for transmitting wireless signals in all direction is uniform, and a sensing range for wireless signal receiving near the antenna is also uniform. Therefore, the coverage of the omnidirectional antenna ANT 1 in FIG. 6 is uniform. Radiation energy of the directional antenna for transmitting wireless signals is concentrated in a particular direction, and a sensing range for wireless signal receiving is also concentrated in the direction. Therefore, the directional antenna transmits a wireless signal in the direction by a long distance, and has a strong anti-interference capability. For example, as shown in FIG. 6, a coverage diameter of the omnidirectional antenna ANT 1 is 50 m, and coverage of the directional antenna ANT 2 and the directional antenna ANT 3 is an ellipse whose major axis is 100 m. An anti-interference capability and a long-distance transmission capability of the wireless network interface controller can be improved by using the directional antenna ANT 2 and the directional antenna ANT 3.

In some examples, radiation energy of the directional antennas is concentrated in different directions, and by using a plurality of directional antennas radiating toward different directions, all-around coverage for signals can be implemented, to ensure a coverage rate increase. For example, radiation ranges of a directional antenna A and a directional antenna B are different in a particular plane. The radiation range of the directional antenna A is 0° to 90, a signal coverage distance gradually increases from 0° to 45°, and a signal coverage distance gradually decreases from 45° to 90°. The other directional antenna B may actually cover a range of 90° to 180°, a signal coverage distance gradually increases from 90° to 135°, and a signal coverage distance gradually decreases from 135° to 180°. In this way, the directional antenna A and the directional antenna B may implement signal coverage of 0° to 180°.

It should be noted that, the foregoing descriptions of the shape of the coverage of each antenna in FIG. 1, FIG. 5, and FIG. 6 are merely examples, and an actual case needs to be determined based on actual performance of the antennas. For example, the directional antenna coverage of the directional antenna ANT 2 and the directional antenna ANT 3 shown in FIG. 6 is merely used for finding out directionality of wireless signal transmitting or receiving of the directional antennas, and does not represent that there is an uncovered area at a junction between the coverage of the directional antenna ANT 2 and the directional antenna ANT 3. In an actual case, using the wireless network interface controller as a center, a range that can be actually covered by the directional antenna ANT 2 in FIG. 6 is 0° to 180°, where a signal coverage distance gradually increases from 0° to 90°, and a signal coverage distance gradually decreases from 90° to 180°. A range that can be actually covered by the directional antenna ANT 3 is 180° to 360°, where a signal coverage distance gradually increases from 180° to 270°, and a signal coverage distance gradually decreases from 270° to 360°. In this way, it can be ensured that there is no dead zone for wireless signal receiving or sending, so that the coverage rate of wireless signals can be increased.

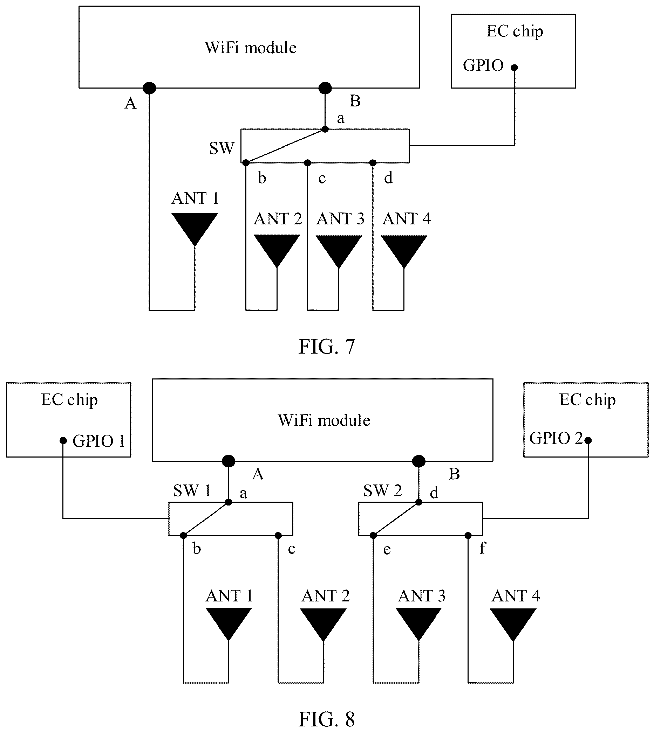

In some embodiments, the antenna switching switch may be connected to a plurality of antennas, to switch between the plurality of antennas, thereby ensuring a wireless communication capability of the wireless network interface controller. For example, in FIG. 4, there may alternatively be more than two antennas connected to the antenna interface B of the WiFi module by using the antenna switching switch SW. As shown in FIG. 7, the antenna connected to the antenna interface A of the WiFi module is one antenna ANT 1, and antennas connected to the antenna interface B by using the antenna switching switch SW is the antenna ANT 2, the antenna ANT 3, and an antenna ANT 4. In this case, a total quantity of antennas of the wireless network interface controller is four, and a coverage rate of the four antennas can be further improved. In this way, when one of the plurality of antennas is blocked in receiving and sending wireless signals, the remaining antennas may still normally receive and send wireless signals, and then the antenna switching switch is used to switch one of the antennas to be connected to the WiFi module, so that the anti-interference capability of the wireless network interface controller can be improved. Cases in which the antenna is blocked in receiving and sending wireless signals include but are not limited to electromagnetic interference cases such as antenna damage and blocking.

In some embodiments, each antenna interface of the WiFi module may be connected to a plurality of antennas by using the antenna switching switch, to improve the communication capability of the wireless network interface controller. For example, in FIG. 8, antennas connected to the antenna interface A of the WiFi module by using an antenna switching switch SW 1 is the ANT 1 and the ANT 2, and antennas connected to the antenna interface B of the WiFi module by using an antenna switching switch SW 2 is the ANT 3 and the ANT 4. An interface GPIO 1 and an interface GPIO 2 are disposed in the EC chip, so that the CPU can control the antenna switching switch SW 1 by using the interface GPIO 1 and control the antenna switching switch SW 2 by using the interface GPIO 2. The CPU may control switching of connections between the terminal a and the terminal b or the terminal c of the antenna switching switch SW 1, to implement connections between the antennas ANT 1 and ANT 2 and the WiFi module. The CPU may also control switching of connections between a terminal d and a terminal e or a terminal f of the antenna switching switch SW 2, to implement connections between the antennas ANT 3 and ANT 4 and the WiFi module.

It should be noted that, a quantity of antenna interfaces of the WiFi module and whether the antenna interface is connected to the antenna switching switch are not limited in embodiments of this application. Some or all of antenna interfaces of the WiFi module are connected to antenna switching switches, and each antenna switching switch is configured to switch connections between two or more antennas and the WiFi module.

Optionally, in the wireless network interface controller provided in embodiments of this application, a radiation type of an antenna connected to the antenna interface of the WiFi module may be determined based on an actual case. The radiation type includes an omnidirectional antenna and a directional antenna. For example, in the wireless network interface controller shown in FIG. 7, the antenna ANT 1, the antenna ANT 2, the antenna ANT 3, and the antenna ANT 4 may all be omnidirectional antennas or directional antennas. In addition, one part of the antenna ANT 1, the antenna ANT 2, the antenna ANT 3, and the antenna ANT 4 may be omnidirectional antennas, and the other part may be directional antennas.

In some embodiments, in the wireless network interface controller provided in embodiments of this application, a type of an antenna connected to the antenna interface of the WiFi module may be a single-function antenna, or may be a multi-function antenna module. The type of the antenna connected to the antenna interface may be specifically determined based on an actual case. For example, the antenna ANT 1 shown in FIG. 4 may be an antenna module having WiFi and Bluetooth functions, and the antenna ANT 2 and the antenna ANT 3 may be WiFi antennas. In this way, it can be ensured that the wireless network interface controller has WiFi and Bluetooth functions. For example, as shown in FIG. 8, the antenna ANT 1 may be a WiFi antenna, the antenna ANT 2 may be a Bluetooth antenna, and the antenna ANT 3 and the antenna ANT 4 may both be WiFi antennas. In this way, independence between the Bluetooth antenna and the WiFi antenna of the wireless network interface controller can be ensured, to improve accuracy of signal transmission, and improve a WiFi signal transmission capability of the WiFi antenna.

Therefore, an antenna switching method is further provided for the wireless network interface controller provided in embodiments of this application. The antenna switching method provided in embodiments of this application may be applied to an electronic device. A software system of the electronic device may use a layered architecture, an event-driven architecture, a microkernel architecture, a micro-service architecture, or a cloud architecture. In an embodiment of the present invention, an example in which a Windows^{®} system using the layered architecture is used for describe a software structure of the electronic device.

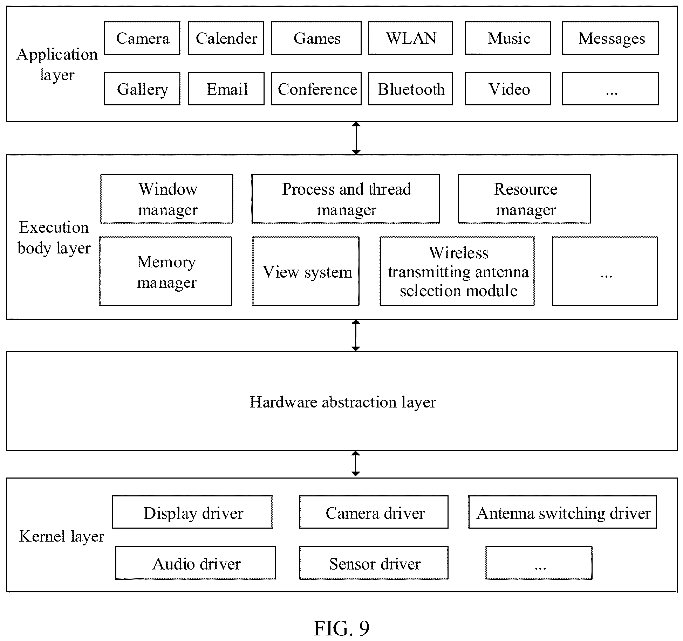

FIG. 9 is a block diagram of a software structure of an electronic device 100 according to an embodiment of the present invention. In the layered architecture, software is divided into several layers, and each layer has a clear role and task. The layers communicate with each other by using software interfaces. In some embodiments, the Windows^{®} system is divided into four layers, which are respectively an application layer, an execution body layer, a hardware abstraction layer (hardware abstraction layer, HAL), and a kernel layer from top to bottom.

The application layer may include a series of application packages. As shown in FIG. 9, the application package may include applications such as Camera, Gallery, Calendar, WLAN, Bluetooth, Music, Video, Email, Conference, Games, and Messages.

The execution body layer provides an application programming interface (application programming interface, API) and a programming framework for applications at the application layer. The execution body layer includes some predefined functions.

As shown in FIG. 9, the execution body layer may include a window manager, a process and thread manager, a memory manager, a view system, a resource manager, a wireless transmitting antenna selection (wireless transmitting antenna selection, WiTAS) module, and the like.

The window manager is configured to manage a window program. The window manager may obtain a size of a display, determine whether there is a status bar, perform screen locking, take a screenshot, and the like.

The process and thread manager is configured to create or end a process and a thread that correspond to an application.

The memory manager is configured to: store and obtain data, make the data accessible to a process of an application, provide a private address space for each process, and support memory sharing between processes.

The view system includes a visual control, for example, a control for displaying a text or a control for displaying a picture. The view system may be configured to construct an application. A display interface may include one or more views. For example, a display interface including a notification icon may include a view for displaying a text and a view for displaying a picture.

The resource manager provides various resources for an application, such as a localized string, an icon, a picture, a layout file, and a video file.

A WiTAS module may monitor a running status of an application in the application layer, and monitor a running status of a specified application when determining that the specified application has been started, and when determining that the application runs abnormally, may interact with an antenna switching driver in the kernel layer by using the HAL layer, so that the antenna switching driver triggers the antenna switching switch in the wireless network interface controller to perform antenna switching, thereby improving the running status of the application. The specified application is a preset application that may be used to trigger antenna switching, such as an application with a high running network latency or an application that satisfies preset rule classification.

The kernel layer is a layer between hardware and software. The kernel layer includes at least a display driver, a camera driver, an audio driver, a sensor driver, an antenna switching driver, and the like.

The HAL layer is an interface layer located between the kernel layer of the operating system and a hardware circuit, to abstract hardware. The HAL layer hides hardware interface details of a specific platform, provides a virtual hardware platform for the operating system, and makes the operating system hardware-independent and capable of being transplanted on a plurality of platforms.

Each antenna interface of a current WiFi module is connected to one antenna. Therefore, the WiFi module can output only one received signal strength, and the received signal strength can only reflect a largest received signal strength in received signal strengths corresponding to a plurality of antennas, and cannot determine an antenna corresponding to the largest received signal strength. For example, two antenna interfaces of a WiFi module common in the current market are respectively connected to an antenna ANT 1 and an antenna ANT 2. The following describes communication performance of the WiFi module by using a received signal strength (received signal strength indicator, RSSI) as an example. An RSSI 1 represents a received signal strength of the antenna ANT 1, and an RSSI 2 represents a received signal strength of the antenna ANT 2. In this case, based on a current detection technology for a received signal strength of an antenna, the WiFi module can output only one received signal strength, the received signal strength is the larger received signal strength in the RSSI 1 and the RSSI 2, but cannot determine whether the signal strength corresponds to the antenna ANT 1 or the antenna ANT 2.

A technology of measuring a received signal strength of an antenna by using the current WiFi module cannot be used to perform accurate measurement on a wireless network signal provided in embodiments of this application, and antenna switching cannot be implemented. For example, using the wireless network interface controller shown in FIG. 4 as an example, one antenna interface A of the WiFi module is connected to the antenna ANT 1, and the other antenna interface B is connected to the antenna ANT 2 and the antenna ANT 3 by using the antenna switching switch. For example, an RSSI 1 represents a received signal strength of the antenna ANT 1, an RSSI 2 represents a received signal strength of the antenna ANT 1, and an RSSI 3 represents a received signal strength of the antenna ANT 3. In a case, if the RSSI 1 is greater than the RSSI 2, and the RSSI 1 is greater than the RSSI 3 in an actual case, based on the existing technology for detecting a received signal strength of an antenna by using a WiFi module, when the terminal a is connected to the terminal b of the antenna switching switch SW, a value that can be obtained through measurement is R1=MAX(RSSI 1, RSSI 2)=RSSI 1. Then, when the antenna switching switch SW switches to connect the terminal a to the terminal c, a value that can be obtained through measurement is R2=MAX(RSSI 1, RSSI 3)=RSSI 1. Because values of R1 and R2 are actually the same in different antenna switching cases, whether to switch antennas by using the antenna switching switch cannot be determined directly based on the received signal strengths of the antennas in this case.

The following embodiments describe, in detail by using the structure of the wireless network interface controller shown in FIG. 4 as an example, an antenna switching method provided in embodiments of this application. The wireless network interface controller includes one antenna switching switch, and the antenna switching switch is configured to switch between two antennas located on a same antenna interface. It should be understood that, in actual application, the wireless network interface controller may include more or fewer antenna switching switches, and each antenna switching switch may be configured to control switching of more or fewer antennas. This is not limited in embodiments of this application.

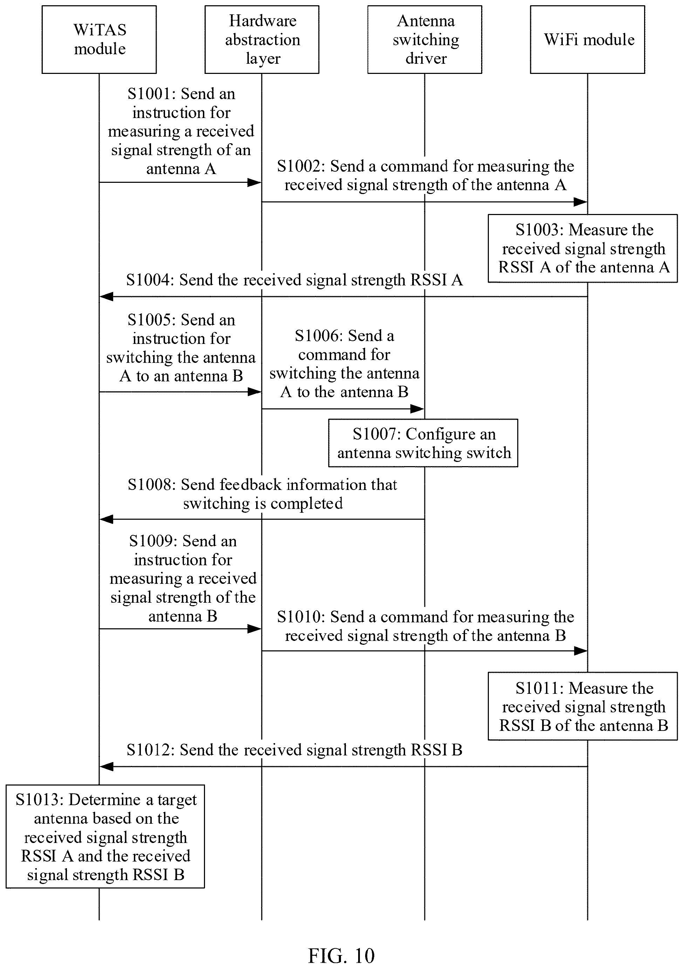

Optionally, FIG. 10 is a schematic flowchart of an antenna switching method according to an embodiment of this application. It should be noted that, the method is not limited to FIG. 10 and the following specific sequences. It should be understood that, in another embodiment, sequences of some steps in the method may be interchanged based on an actual requirement, or some steps may be omitted or deleted. The method includes the following steps.

S1001: A WiTAS module sends an instruction for measuring a received signal strength of an antenna A to an HAL layer.

In some embodiments, the WiTAS module may be configured to monitor a running status of an application. When determining that the application runs abnormally, the WiTAS module may trigger measurement of a received signal strength of an antenna, to determine whether antenna switching needs to be performed, and determine a target antenna to be switched for connection.

Optionally, the WiTAS module monitors a running status of a specified application. The specified application is a preset application that may be used to trigger antenna switching, such as an application with a high running network latency or an application with a preset category. The preset category is, for example, a video type or a conference type.

For example, after determining that an electronic device starts a conference application, the WiTAS module starts to monitor a running status of the conference application. When determining that the conference application has an exception such as freezing or a high network latency, the WiTAS module may determine to trigger an antenna switching procedure. In this case, the WiTAS module sends the instruction for measuring the received signal strength of the antenna A to the HAL layer. The antenna A is an antenna currently connected to the antenna switching switch. The WiTAS module measures, by using subsequent steps, received signal strengths of a plurality of antennas connected to the antenna switching switch, to determine the to-be-switched target antenna. Optionally, the target antenna is any antenna whose received signal strength meets a condition in the plurality of antennas connected to the antenna switching switch. Refer to the following steps for a specific method for determining the target antenna.

For example, as shown in FIG. 4, the antenna A is an antenna currently connected to a WiFi module by using the antenna switching switch. For example, the antenna A is the antenna ANT 2.

In some examples, the instruction for measuring the received signal strength of the antenna carries measurement duration and a measurement type. The measurement type indicates performance type of a measured antenna signal. For example, the measurement type is a received signal strength or a signal transmission speed. Subsequently, the WiFi module measures an antenna signal based on the measurement type, to obtain a corresponding measurement value, for example, the received signal strength of the antenna A. The measurement duration indicates duration of measurement for an antenna signal. For example, the WiFi module measures the received signal strength of the antenna A within 0.5S based on the measurement duration.

S1002: The HAL layer sends a command for measuring the received signal strength of the antenna A to the WiFi module.

The WiFi module is configured to measure and output a received signal strength of a single antenna. Therefore, in comparison with that the WiFi module can output only one received signal strength in the conventional technology, in the antenna switching method provided in embodiments of this application, a measurement of the received signal strength of the single antenna may be output, to facilitate the WiTAS module in subsequently determining, based on the measurement results of the received signal strengths of the antennas, whether antenna switching needs to be performed and the to-be-switched target antenna.

In some embodiments, the WiFi module includes a measurement unit, and the measurement unit is configured to measure a received signal strength of each antenna interface. Chip firmware (chip firmware) may be configured to enable the wireless network interface controller to output the received signal strength of each antenna.

In some examples, the chip firmware is configured in the WiFi module, so that the wireless network interface controller can output the received signal strength of each antenna. For example, chip firmware A is configured in a currently common WiFi module. The chip firmware A is configured to: obtain the received signal strength that is of each antenna interface and that is measured by the measurement unit, and calculate a largest received signal strength in signal strengths of all antenna interfaces, so that the WiFi module can output the largest received signal strength. Then, the electronic device may display the largest received signal strength, so that the user views the signal strength. Chip firmware B configured in the WiFi module provided in embodiments of this application may obtain the received signal strength that is of each antenna interface and that is measured by the measurement unit, and ensure that the WiFi module can directly output the received signal strength of each antenna interface, to facilitate subsequently determining the target antenna based on the received signal strength of each antenna.

Optionally, the chip firmware A and the chip firmware B may not be configured in the wireless network interface controller provided in embodiments of this application, and the measurement unit directly outputs the received signal strength of each antenna. Alternatively, the chip firmware A and the chip firmware B may both be configured in the wireless network interface controller provided in embodiments of this application, so that the electronic device can display a signal strength based on the largest received signal strength calculated by the chip firmware A, and can control the antenna switching switch based on the received signal strength that is of each antenna and that is output by the chip firmware B.

In some examples, the chip firmware may be configured in a plurality of manners. For example, the chip firmware may be configured through software, hardware, or a combination of software and hardware. For example, a program for implementing a function of measuring the received signal strength of each antenna may be burnt in the WiFi module of the wireless network interface controller, to configure the chip firmware in the software manner. A program for implementing a function of measuring the received signal strength of each antenna may alternatively be burnt in a piece of independent hardware, so that the hardware becomes a hardware implementation of the chip firmware.

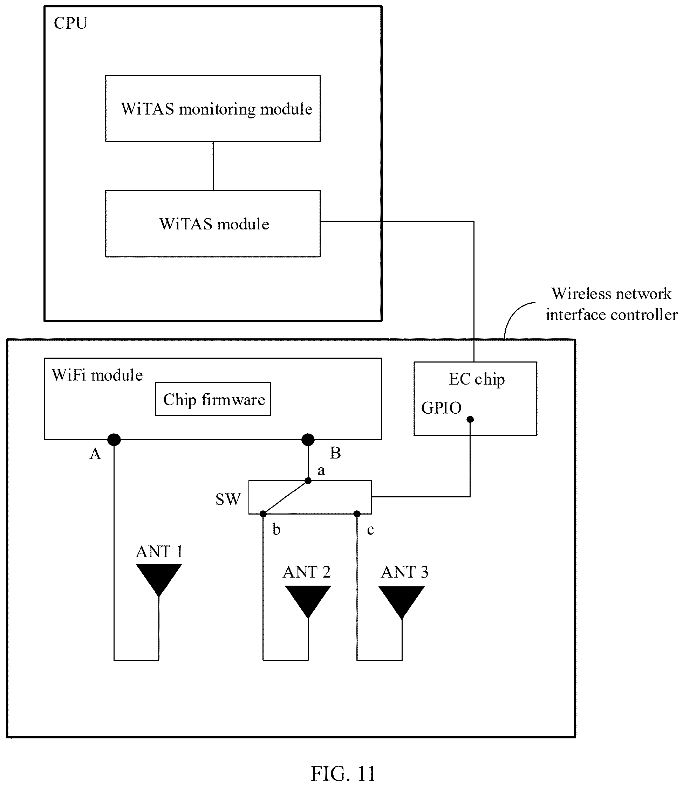

In some examples, as shown in FIG. 11, the chip firmware may be configured in the WiFi module. It should be understood that, a configuration position of the chip firmware is not limited in embodiments of this application. For example, the chip firmware may be configured on another chip independent of the WiFi module.

Optionally, the configuration manner and the configuration position of the chip firmware may be combined based on actual application. For example, the chip firmware may be configured in the WiFi module in the software manner. For example, the program for implementing the function of measuring the received signal strength of each antenna may be burnt in the WiFi module. The chip firmware may alternatively be configured in an independent chip, so that the chip has a function of measuring and outputting the received signal strength of each antenna.

In some other embodiments, the WiFi module may alternatively obtain one or more measurement values in a code error rate, a packet loss rate, a retransmission rate, a network latency, and a signal-to-noise ratio, and then the WiFi module calculates the measurement values obtained through measurement, to determine the received signal strength of the antenna.

In some examples, if a program for implementing a function of outputting the received signal strength of each antenna is burnt in the WiFi module, the WiFi module may output the received signal strength of each antenna. For another example, if the program for implementing the function of outputting the received signal strength of each antenna based on the code error rate is burnt in the WiFi module, the WiFi module may output the received signal strength of each antenna based on the code error rate. For still another example, if a program for implementing a function of outputting the received signal strength of each antenna based on four parameters: the packet loss rate, the retransmission rate, the network latency, and the signal-to-noise ratio is burnt in the WiFi module, the WiFi module may output the received signal strength of each antenna based on the four parameters.

Optionally, after obtaining the one or more measurement values in the code error rate, the packet loss rate, the retransmission rate, the network latency, and the signal-to-noise ratio, the WiFi module may directly send the obtained measurement values to a controller connected to the wireless network interface controller. Then, the controller may determine, directly based on these measurement values, whether antenna switching needs to be performed.

In some embodiments, the WiFi module is connected to the WiTAS module by using the HAL layer, and the WiTAS module triggers, by using the HAL layer, the WiFi module to measure a corresponding antenna signal.

In some examples, the command carries an identifier of the antenna A, where the identifier indicates the antenna A.

In some examples, to keep modularity and independence, the WiTAS module works at an execution body layer. Therefore, the WiTAS module may communicate with an underlying layer by using an interface of the HAL layer. The WiTAS module may send the instruction, and the HAL layer converts the instruction into the command that can be recognized by an antenna switching driver or the WiFi module, and sends the command to the corresponding antenna switching driver or WiFi module.

S1003: The WiFi module measures a received signal strength RSSI A of the antenna A.

In some examples, after receiving the command sent by the WiTAS module by using the HAL layer, the WiFi module determines a to-be-measured antenna, for example, the antenna A. Then, the WiFi module may measure the received signal strength of the antenna A within preset measurement duration, for example, may measure an average value of the received signal strength of the antenna A within the duration of 0.5S, to ensure that the received signal strength RSSI A of the antenna A can be accurately measured.

Optionally, the antenna may transmit a plurality of signals such as a WiFi signal and a Bluetooth signal. In this case, after receiving the command, the WiFi module may measure the received signal strength of a signal currently transmitted by the antenna. For example, chip firmware corresponding to a type of the measured signal may be configured in the WiFi module. For example, if the chip firmware measures the received signal strength RSSI A of the WiFi antenna A, the chip firmware may be WiFi chip firmware. For another example, if the chip firmware measures the received signal strength RSSI A of the Bluetooth antenna A, the chip firmware may be Bluetooth chip firmware.

S1004: The WiFi module sends the received signal strength RSSI A to the WiTAS module.

Optionally, when sending the command for measuring the received signal strength of the antenna A to the WiFi module, the HAL layer may further send callback information to the WiFi module, where the callback information is used for enabling the WiFi module to notify the WiTAS module of the received signal strength RSSI A. In this case, after determining the received signal strength RSSI A, the WiFi module feeds back the received signal strength RSSI A to the WiTAS module based on the callback information.

S1005: The WiTAS module sends an instruction for switching the antenna A to an antenna B to the HAL layer.

S1006: The HAL layer sends a command for switching the antenna A to the antenna B to the antenna switching driver.

S1007: The antenna switching driver configures the antenna switching switch.

In some embodiments, the WiTAS module determines that measurement of the received signal strength of the antenna A has been completed when receiving the received signal strength RSSI A. For example, in the foregoing step S1001, the antenna A is the antenna ANT 2 in FIG. 4. In this case, the WiTAS module determines that the antenna B (that is, the ANT 3) still exists in a current antenna interface B, and the WiTAS module may trigger measurement of the antenna B.

In some examples, as shown in FIG. 4, the antenna switching switch is not connected to the antenna B at present, the antenna B does not work, and a received signal strength of the antenna B cannot be determined. Therefore, the WiTAS module may send the instruction for switching the antenna A to the antenna B to the HAL layer, to trigger the HAL layer to send the command for switching the antenna A to the antenna B to the antenna switching driver, to drive the antenna switching switch to switch the antenna A connected to the WiFi module to the antenna B.

For example, as shown in FIG. 4, after measurement of the received signal strength of the antenna A that is currently connected to the WiFi module by using the antenna switching switch has been completed, the electronic device may send, by using a CPU, the instruction for switching the antenna A connected to the WiFi module to the antenna B. The antenna switching switch SW receives the instruction by using a GPIO interface, and switches a connection between the terminal a and the terminal b to a connection between the terminal a and the terminal c according to the instruction, to complete a process of switching the antenna A (for example, the ANT 2) to the antenna B (for example, the ANT 3).

S 1008: The antenna switching driver sends, to the WiTAS module, feedback information that switching is completed.

Optionally, when sending the command for switching the antenna A to the antenna B to the antenna switching driver, the HAL layer may further send callback information to the antenna switching driver, where the callback information is used for enabling the antenna switching driver to send, to the WiTAS module, the feedback information that the antenna switching switch completes switching. In this case, after the antenna switching is completed, the antenna switching driver may send the feedback information to the WiTAS module based on the callback information.

S1009: The WiTAS module sends an instruction for measuring the received signal strength of the antenna B to the HAL layer.

S1010: The HAL layer sends a command for measuring the received signal strength of the antenna B to the WiFi module.

S1011: The WiFi module measures the received signal strength RSSI B of the antenna B.

S1012: The WiFi module sends the received signal strength RSSI B to the WiTAS module.

In some embodiments, in step S1009 to step S1012, after the antenna A is switched to the antenna B, the WiTAS module measures the received signal strength RSSI B of the antenna B by using the WiFi module, to facilitate subsequently comparing the received signal strength RSSI A with the received signal strength RSSI B, to determine the target antenna. Optionally, for detailed content about the measurement of the received signal strength in step S1009 to step S1012, refer to related content of the foregoing step S1001 to step S1004. Details are not described herein again.

It should be understood that, when a single antenna interface of the WiFi module has more corresponding antennas, the WiTAS module may further repeat step S1009 to step S1012 again, to obtain received signal strengths of other antennas.

Step S1013: The WiTAS module determines the target antenna based on the received signal strength RSSI A and the received signal strength RSSI B.

In some embodiments, after obtaining measurement results of received signal strengths of the antennas, the WiTAS module may determine the target antenna based on these measurement results of the received signal strengths, where the target antenna may be the to-be-switched antenna. In some examples, the target antenna may alternatively be an antenna currently connected to the WiFi module.

Optionally, after determining the target antenna, the WiTAS module may further generate an antenna switching instruction for indicating the to-be-switched target antenna. For example, the antenna switching instruction carries an identifier of the target antenna.

In some embodiments, the antenna switching instruction is used for controlling the WiFi module to be connected to the target antenna. For example, in FIG. 4, after the CPU sends the antenna switching instruction to the antenna switching switch SW by using the GPIO interface, the antenna switching switch SW correspondingly switches a connection relationship between terminals based on the antenna switching instruction.

For example, the WiTAS module determines, based on the measurement results of the received signal strengths of the antennas, the antenna B as the to-be-switched target antenna. In this case, as shown in FIG. 4, the antenna B is the antenna ANT 3 that is not currently connected to the WiFi module, and the WiTAS module may generate an antenna switching instruction indicating to switch the antenna ANT 3. If an identifier Tc represents the terminal c corresponding to the antenna ANT 3, the antenna switching instruction may carry the identifier Tc.

In some examples, the WiTAS module determines the largest received signal strength in the received received signal strengths of the plurality of antennas, and determines an antenna that generates the largest received signal strength as the target antenna. For example, the antenna switching switch is configured to control the antenna A, the antenna B, an antenna C, or an antenna D to be connected to the WiFi module. The WiTAS module detects the received signal strength RSSI A corresponding to the antenna A, the received signal strength RSSI B corresponding to the antenna B, a received signal strength RSSI C corresponding to the antenna C, and a received signal strength RSSI D corresponding to the antenna D. If RSSI D>RSSI B>RSSI C>RSSI A, the WiTAS module determines the antenna D as the target antenna.

In some examples, the WiTAS module determines the target antenna based on a difference between the received received signal strengths of the plurality of antennas. For example, the WiTAS module calculates a difference M between the received signal strength RSSI A and the received signal strength RSSI B, to determine the target antenna based on the difference M. For example, M=RSSI A-RSSI B. When M is greater than 0, it may indicate that the received signal strength RSSI A of the antenna A is greater than the received signal strength RSSI B of the antenna B. In other words, performance of the antenna A is better than performance of the antenna B. Therefore, in response to that the difference M is greater than 0, the WiTAS module determines the antenna A as the target antenna. When M is less than 0, it may indicate that the received signal strength RSSI A of the antenna A is less than the received signal strength RSSI B of the antenna B. In other words, performance of the antenna B is better than performance of the antenna A. Therefore, in response to that the difference M is less than 0, the WiTAS module determines the antenna B as the target antenna. When M is equal to 0, it may indicate that the received signal strength RSSI A of the antenna A is the same as the received signal strength RSSI B of the antenna B. In other words, performance of the antenna B is the same as performance of the antenna A. Therefore, in response to that the difference M is equal to 0, the WiTAS module determines the antenna currently connected to the WiFi module as the target antenna.

Optionally, in a process of determining the target antenna based on values of the received signal strength RSSI A and the received signal strength RSSI B, the WiTAS module may further obtain the received signal strength RSSI A and the received signal strength RSSI B for a plurality of times, compare values based on a plurality of groups of received signal strengths RSSI A and received signal strengths RSSI B that are obtained for the plurality of times, and then determine the target antenna based on a comparison result. After completing one round of obtaining measurement results of received signal strengths of a plurality of antennas corresponding to one antenna interface, the WiTAS module may determine that a group of received signal strengths are obtained. Then, the WiTAS module triggers a next round of procedure of obtaining received signal strengths, so that a next group of received signal strengths can be obtained. For example, as shown in FIG. 10, step S1001 to step S1012 are performed repetitively, to obtain a plurality of groups of received signal strengths.

In some examples, in a process of comparing results, the WiTAS module determines that a quantity of times for which the received signal strength RSSI A is greater than the received signal strength RSSI B is greater than or equal to a preset quantity A of times, and determines the antenna A as the target antenna. Otherwise, if the quantity of times for which the received signal strength RSSI B is greater than the received signal strength RSSI A is greater than or equal to the preset quantity A of times, the WiTAS module determines the antenna B as the target antenna. For example, the WiTAS module obtains Mᵢ RSSI A-RSSI B through calculation based on each group of received signal strengths RSSI A and received signal strengths RSSI B, where i represents a group number of the received signal strengths RSSI A and the received signal strengths RSSI B. For example, if there are a total of five groups of received signal strengths RSSI A and received signal strengths RSSI B, the preset quantity A of times is 3, and M₁, M₂, M₃, and M₅ are all greater than 0, the antenna A may be determined as the target antenna.

In some examples, in a process of comparing results, if the WiTAS module determines that a quantity of times for which the received signal strength RSSI A is successively greater than the received signal strength RSSI B is greater than or equal to a preset quantity B of times, the antenna A may be determined as the target antenna. Otherwise, if the WiTAS module determines that a quantity of times for which the received signal strength RSSI B is successively greater than the received signal strength RSSI A is greater than or equal to the preset quantity B of times, the antenna B may be determined as the target antenna. For example, M=RSSI A-RSSI B is obtained through calculation based on each group of received signal strengths RSSI A and received signal strengths RSSI B, and when M is less than 0 for the n^{th} time, and n is a positive integer, the WiTAS module determines the antenna B as the target antenna. When M is greater than 0 for the n^{th} time, the WiTAS module determines the antenna A as the target antenna. When M is equal to 0 for the n^{th} time, the WiTAS module determines the antenna currently connected to the WiFi module as the target antenna. For another example, Mᵢ=RSSI A-RSSI B is obtained through calculation based on each group of received signal strengths RSSI A and received signal strengths RSSI B, where i represents a group number of the received signal strengths RSSI A and the received signal strengths RSSI B. For example, if there are a total of seven groups of received signal strengths RSSI A and received signal strengths RSSI B, the preset quantity A of times is 4, and M₂, M₃, M₄, M₅, and M₆ are all greater than 0, it indicates that the quantity of times for which the received signal strength RSSI A is successively greater than the received signal strength RSSI B is 5. In this case, the antenna A may be determined as the target antenna.

In some embodiments, in a process of determining the target antenna, the WiTAS module may further determine a freezing time, where the freezing time indicates duration in which the antenna switching switch stops antenna switching. For example, based on the freezing time, after controlling the antenna switching switch to connect the WiFi module to the target antenna, the electronic device no longer performs a switching action within the freezing time.

Optionally, the WiTAS module may further add the freezing time to the to-be-sent antenna switching instruction. The antenna switching instruction controls the WiFi module to keep a connection to the target antenna within the freezing time, so that a case of frequent switching can be avoided, thereby ensuring stability of a communication connection.

In some examples, the connection between the WiFi module and the target antenna may be kept for preset duration in a plurality of manners. For example, after receiving the antenna switching instruction, the antenna switching switch controls, based on the antenna switching instruction, the WiFi module to be connected to the corresponding target antenna. Afterwards, the antenna switching switch may stop receiving the antenna switching instruction within the preset duration, or the antenna switching switch may receive only the antenna switching instruction within the preset duration, but does not make a response to the received antenna switching instruction.

Optionally, the electronic device may alternatively stop sending the antenna switching instruction to the antenna switching switch within the preset duration after determining that the WiFi module is connected to the corresponding target antenna. For example, the antenna switching switch controls, based on the antenna switching instruction, the WiFi module to be connected to the corresponding target antenna, and sends a feedback message of successful switching to the electronic device. After receiving the feedback message, the electronic device may stop sending the antenna switching instruction to the antenna switching switch within one minute. In this time period, the electronic device may continue the process of determining the target antenna, or may stop the process of determining the target antenna.

Optionally, in the following scenario, the antenna switching instruction determined after the target antenna is determined based on step S1013 may carry the freezing time but does not carry an identifier of the target antenna. For example, after the target antenna is determined based on the foregoing step S1013, the antenna switching method may further include the following process: The WiTAS module may determine whether the antenna currently connected to the WiFi module is the target antenna. In response to that the antenna currently connected to the WiFi module is the target antenna, the antenna switching instruction generated by the WiTAS module carries the freezing time. In other words, when the antenna currently connected to the WiFi module is the target antenna, the WiTAS module no longer indicates to switch an antenna. It should be understood that, the antenna switching instruction is merely an example for description, and the WiTAS module may alternatively send the identifier of the target antenna independently and send the freezing time independently.

Correspondingly, after step S1013, the antenna switching method may further include the following process: In response to that the antenna currently connected to the WiFi module is not the target antenna, the WiTAS module generates the antenna switching instruction carrying the identifier of the target antenna and the freezing time.

For example, in the process of the foregoing step S1005 to step S1008, the WiTAS module first measures the received signal strength of the antenna A. Then, to measure the received signal strength of the antenna B, the WiTAS module performs switching control on the antenna switching switch, so that the WiFi module is connected to the antenna B by using the antenna switching switch. Then, if the antenna switching switch does not perform a switching action, it indicates that the antenna currently connected to the WiFi module is the antenna B. If the WiTAS module determines that the target antenna is the antenna B, the WiTAS module may then determine the antenna switching instruction carrying the freezing time, for indicating the antenna switching switch not to perform a switching action within the freezing time.

In some embodiments, based on the foregoing step S1001 to step S1012, after determining that measurement of all antennas whose received signal strengths are to be measured is completed, the WiTAS module may further indicate the antenna switching switch to switch to an initial antenna. For example, in the scenario shown in FIG. 4, if measurement of the received signal strengths of the antennas is triggered when the antenna connected to the WiFi module is the ANT 2, after measurement of the received signal strengths of the ANT 2 and the ANT 3 is completed, the WiTAS module may indicate the antenna switching switch to switch to the ANT 2, that is, switch to the initial antenna connected to the antenna switching switch before the received signal strengths of the antennas are measured. Then, the WiTAS module determines the ANT 3 (for example, the antenna B) as the target antenna based on the plurality of obtained received signal strengths of the antennas. In this case, the WiTAS module generates the antenna switching instruction corresponding to the antenna B, where the antenna switching instruction carries the identifier of the antenna B and the corresponding freezing time. The freezing time indicates the antenna switching switch not to perform a switching action any more within the freezing time after switching the antenna A connected to the WiFi module to the antenna B.

In some other embodiments, in the process of determining the target antenna, the WiTAS module may determine the corresponding target antenna and the corresponding freezing time based on whether a difference between received signal strengths of different antennas meets a preset range. The preset range indicates the freezing time corresponding to an interval of different differences and whether the antenna switching switch needs to perform a switching action. For example, in the process of determining the target antenna based on the received signal strength RSSI A and the received signal strength RSSI B, the WiTAS module may first calculate a difference M1 between the received signal strength RSSI A and the received signal strength RSSI B. If M1 is greater than 0, the antenna A may be determined as the target antenna. Then, the WiTAS module further determines the freezing time of the antenna switching switch based on an absolute value of M1, and whether the antenna switching switch needs to switch to the target antenna. If the absolute value of M1 is greater than or equal to a threshold A, it may be determined that the antenna needs to be switched, and the freezing time of the antenna switching switch is duration A. If the absolute value of M1 is less than the threshold A, and is greater than or equal to a threshold B, it may be determined that the antenna needs to be switched, and the freezing time of the antenna switching switch is duration B. If the absolute value of M1 is less than the threshold B, it may be determined that the antenna does not need to be switched, and the freezing time of the antenna switching switch is duration C.

For example, the threshold A is 6 dB, the threshold B is 3 dB, the duration A is 60s, the duration B is 30S, and the duration C is 20S. If M1>0, it indicates that the signal strength of the antenna A is higher, and the antenna A may be set to the target antenna. Next, if |M1|≥6, it may be determined that the antenna switching switch no longer performs a switching action within 60S after switching to the antenna A. If 3≤|M1|<6, it may be determined that the antenna switching switch no longer performs a switching action within 30S after switching to enable the WiFi module to be connected to the antenna A. If |M1|<3, it may be determined that the antenna switching switch does not need to perform an antenna switching action, and the antenna switching switch no longer performs a switching action within 20S.

In the foregoing process, when |M1|≥6, it may indicate that a difference between the antenna A and the antenna B is large, and it may be considered that a change probability that the received signal strength of the antenna A is less than the received signal strength of the antenna B is small in a short term. Therefore, the duration A corresponding to this case may be set to a long time, to avoid repeated antenna switching in the short term. When 3≤|M1|<6, the difference between the antenna A and the antenna B is small, and it may be considered that a change probability that the received signal strength of the antenna A is less than the received signal strength of the antenna B may exist or is small in a short term. Therefore, the duration B corresponding to this case may be set to a short time, to ensure antenna switching in time. If |M1|<3, it may indicate that the received signal strength RSSI A of the antenna A is similar to the received signal strength RSSI B of the antenna B. The antenna may not be switched, to keep a steady state of an antenna connection.

Optionally, if there are more than three antennas connected to the antenna switching switch, in the method procedure shown in FIG. 10, the received signal strength RSSI corresponding to each antenna may be obtained through measurement by using a method similar to that shown in S1001 to S1004, and then comparison is performed based on received signal strengths RSSI corresponding to every two antennas, to finally determine the target antenna. For example, the WiFi module may be connected to the antenna ANT 1, the antenna ANT 2, the antenna ANT 3, and the antenna ANT 4 by using one antenna switching switch. If it is determined that the antenna ANT 4 has a largest value of the received signal strength RSSI in the antenna ANT 1, the antenna ANT 2, the antenna ANT 3, and the antenna ANT 4, it may be determined that the target antenna is the antenna ANT 4.

Then, if the WiFi module determines that the target antenna is the antenna ANT 4, the WiFi module may continue to determine the corresponding freezing time based on whether the difference between the received signal strength of the antenna currently connected to the WiFi module and the received signal strength of the target antenna meets a preset range.

In this way, the WiTAS module may determine the target antenna based on the received signal strengths of all the antennas, and control the antenna switching switch to switch to the target antenna, to improve communication performance of the wireless network interface controller.

In some embodiments, after determining the target antenna, the WiTAS module may send the antenna switching instruction to the HAL layer, and add the identifier of the target antenna and the freezing time to the antenna switching instruction. Then, the HAL layer sends the antenna switching instruction to the antenna switching driver, to enable the antenna switching driver to configure the antenna switching switch. A process in which the WiTAS module controls the antenna switching switch based on the antenna switching instruction is similar to the implementation process of the foregoing step S1005 to step S1007. Refer to the foregoing related content. Details are not described herein again.

Optionally, if the target antenna is the antenna currently connected to the WiFi module, the WiTAS module may independently send the freezing time to the antenna switching driver by using the HAL layer. Alternatively, the WiTAS module may not determine the freezing time.

In some implementation scenarios, the electronic device may determine, based on current running statuses of some specified applications in the electronic device, whether to perform the foregoing antenna switching method. The specified applications may be set by the user, or may be determined by the electronic device based on a preset rule. For example, the user may set an email application usually used by the user as a specified application. For another example, if the preset rule specifies that an application of a video playback type is a specified application, the electronic device may determine an online video player A as the specified application. The electronic device may determine whether an application is of a type specified in the preset rule based on a category of the application in the application market.

In some examples, the specified application includes an application used for playing a video. In this case, the electronic device monitors a currently running application, and when it is determined that the currently running application is an application used for playing a video, a running status of the video application may be monitored. When detecting occurrence of an abnormal case in the specified application, such as network freezing or a high network latency, the electronic device may invoke the WiTAS module to perform the foregoing antenna switching method, so as to improve, through antenna switching, smoothness of a network on which the application runs.

In some other examples, the specified applications include a video application, a game application, and a conference application. After the electronic device is switched on, the video application is started based on an operation of the user. In this case, the electronic device may start to monitor a running status of the video application. When determining that the video application undergoes freezing in a process of playing a video, the electronic device may invoke the WiTAS module to start to perform the foregoing antenna switching method. If the user closes the video application and starts a document editing application, the electronic device determines that the document editing application is not the specified application and does not perform the foregoing antenna switching method, so that an unnecessary antenna switching behavior can be avoided. If the document editing application is still in a started state and the user starts a game application, and the electronic device determines that the game application is the specified application, the electronic device starts to monitor a running status of the game application. When determining that a network latency of the game application is excessively high during running, the electronic device may start to perform the foregoing antenna switching method.

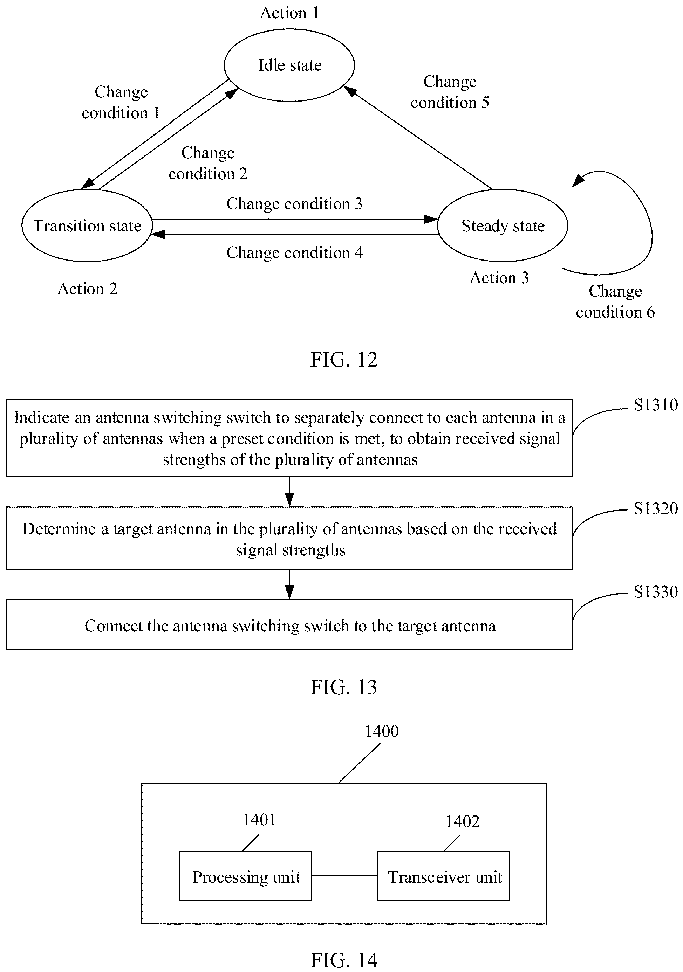

In some embodiments, the WiTAS module may be represented as a state machine. The WiTAS module may include three different states. When the WiTAS module is in one of the states, the WiTAS module may perform an action corresponding to the state. For example, as shown in FIG. 12, the WiTAS module includes three states: an idle state (idle state), a transition state (transition state), and a steady state (steady state).

The WiTAS module in the idle state may perform an action 1. The action 1 may be monitoring running data of applications by using a WiTAS monitoring module. In this case, a corresponding change condition 1 may be that the running data indicates that an abnormal case occurs in running of at least one specified application. When the change condition 1 is met, the WiTAS module changes from the idle state to the transiton state.

For example, in response to an operation of the user, the electronic device starts to run the specified application, and sets the WiTAS module to be in the idle state. In this case, the electronic device monitors the running data of the application by using the WiTAS monitoring module. As shown in FIG. 12, the WiTAS module located in the CPU of the electronic device may be determine that the conference application starts to run, and a network latency of the conference application in a running process is greater than a preset network latency threshold. In this case, the electronic device determines that the change condition 1 is met, and may set the WiTAS module to change from the idle state to the transiton state.

The WiTAS module may perform an action 2 in the transiton state. The action 2 may be determining the target antenna and the corresponding freezing time based on the received signal strengths, and the WiTAS monitoring module continues to monitor the running data of the applications. Correspondingly, a change condition 2 may be determining, based on the running data of the applications, that the specified application no longer runs. When the change condition 2 is met, the WiTAS module changes from the transiton state to the idle state. A change condition 3 may be that the target antenna and the freezing time have been determined, at least one specified application still runs, and an abnormal case occurs in running of the specified application. When the change condition 3 is met, the WiTAS module changes from the transiton state to the steady state.

For example, when the WiTAS module is in the transiton state, the electronic device may perform, for example, the step S 100 1 to step S1013 of the antenna switching method in FIG. 10, to detect received signal strengths of the antennas, and determine the target antenna and the freezing time based on the received signal strengths.

Optionally, the electronic device may further continue to monitor the running data of the application by using the WiTAS monitoring module. For example, the WiTAS module is in the transiton state, and the WiTAS module determines, based on the running data, that the electronic device no longer runs the at least one specified application. In this case, if determining that the change condition 2 is met, the WiTAS module changes from the transiton state to the idle state. For example, the electronic device determines that the target antenna is the antenna A, the corresponding freezing time is 60s, and the running data indicates that the electronic device is still running the conference application, where a network latency of the conference application in the running process is greater than the preset network latency threshold. In this case, the WiTAS module changes from the transiton state to the steady state, to perform antenna switching.

The WiTAS module may perform an action 3 in the steady state. The action 3 may include performing antenna switching control on the antenna switching switch based on the target antenna and the corresponding freezing time, so that the WiFi module keeps a connection to the target antenna within the freezing time. The action 3 further includes monitoring, by using the WiTAS monitoring module, the running data of the one or more specified applications. For example, as shown in FIG. 12, a change condition 4 is that after duration of the connection between the WiFi module and the target antenna exceeds the freezing time, the running data displays that an abnormal case occurs in the at least one specified application. When the change condition 4 is met, the WiTAS module may change from the steady state to the transiton state, to determine the target antenna again, thereby implementing antenna switching. A change condition 5 is that the running data indicates that no specified application is running. If the change condition 5 is met, the WiTAS module may change from the steady state to the idle state. In the steady state, there may also be a change condition 6: After the duration of the connection between the WiFi module and the target antenna exceeds the freezing time, none of the specified applications undergo freezing. If the change condition 6 is met, the WiTAS module may continue to keep the steady state, and perform the action 3 again.

For example, when the WiTAS module is in the steady state, the electronic device may control the antenna switching switch to perform a switching action, to enable the WiFi module to be connected to the target antenna within the freezing time, and the electronic device may further continue to monitor the running data of the applications by using the WiTAS monitoring module.

For example, the target antenna is the antenna A, and the freezing time is 60S. After the electronic device controls the antenna switching switch to enable the WiFi module to switch to the antenna A (for example, the target antenna), and keeps the connection for duration exceeding 60S (for example, the freezing time), if the electronic device is still running the conference application, and the running data indicates that the network latency of the conference application in the running process is still greater than the preset network latency threshold or freezing occurs, the WiTAS module may change from the steady state to the transiton state, to determine the target antenna again.

For another example, after the electronic device controls the antenna switching switch to enable the WiFi module to switch to the antenna A, and keeps the connection for duration exceeding 60S, if the electronic device is still running the conference application, and the running data indicates that the conference application does not undergo freezing in the running process, or the network latency is less than or equal to the preset network latency threshold, the WiTAS module may continue to keep the steady state. In this case, the electronic device may control the antenna switching switch to enable the WiFi module to be connected to the target antenna within the freezing time.

For another example, after the electronic device controls the antenna switching switch to enable the WiFi module to switch to the antenna A, within the freezing time or after the freezing time, the running data indicates that the electronic device no longer runs the specified application. In this case, the WiTAS module changes from the transiton state to the idle state.

An embodiment of this application provides a wireless network interface controller, including: a wireless communication module, an antenna switching switch, and antennas. An antenna interface is disposed on the wireless communication module, and the antenna interface is configured to connect to the antennas, where the antenna switching switch is disposed on each antenna interface in at least one antenna interface, and the antenna switching switch is configured to switch a target antenna connected to the antenna interface. The target antenna is determined based on received signal strengths of all antennas connected to the antenna switching switch.

In some examples, the wireless network interface controller is connected to a controller. The controller may obtain a received signal strength of each antenna, and determine the target antenna based on the received signal strength. Then, the controller may connect the antenna switching switch to the target antenna.

The wireless communication module includes but is not limited to a WiFi module and a Bluetooth module.

In the wireless network interface controller shown in FIG. 4, the wireless communication module is a WiFi module. For example, the WiFi module shown in FIG. 4 includes two antenna interfaces, and each antenna interface may be connected to an antenna. The antenna interface A is directly connected to the antenna NAT 1, and the antenna switching switch SW is disposed on the antenna interface B, to switch, by using the antenna switching switch SW, between antennas connected to the antenna interface B. The terminal a is connected to the terminal b of the antenna switching switch SW shown in FIG. 4, and the antenna interface B is connected to the antenna ANT 2.

In some examples, the antenna switching switch may be configured to switch between a plurality of antennas. For example, as shown in FIG. 7, the antenna switching switch is configured to switch the antenna interface B to be connected to the antenna ANT 2, the antenna ANT 3, or the antenna ANT 4.

In some examples, there may be a plurality of antenna switching switches in the wireless network interface controller. For example, as shown in FIG. 8, antenna switching switches are separately disposed on two antenna interfaces of the WiFi modules.

In some embodiments, the wireless communication module in the wireless network interface controller is further configured to measure and output a received signal strength of each antenna connected to the antenna switching switch. In some examples, when a target application meets a preset condition, the wireless communication module may perform measurement under control of a CPU. Optionally, a measurement instruction sent by the CPU to the wireless communication module carries measurement duration and a measurement type. The measurement type indicates performance type of a measured antenna signal. For example, the measurement type is a received signal strength or a signal transmission speed.

Optionally, the received signal strength of each antenna may alternatively be obtained in another manner. For example, parameters such as a transmission speed measured in a working state of each antenna are used to deduce the received signal strength of each antenna.

In some examples, a radiation type of the antenna is a directional antenna or an omnidirectional antenna. For a specific embodiment of the wireless network interface controller, refer to the specific descriptions of the foregoing embodiment with reference to FIG. 4 to FIG. 8. Details are not described herein again.

As shown in FIG. 13, an embodiment of this application provides an antenna switching method. The antenna switching method is used for performing switching control on antennas in a wireless network interface controller. The wireless network interface controller includes a wireless communication module, an antenna switching switch, and the antennas; and an antenna interface is disposed on the wireless communication module, and the antenna interface is configured to connect to the antennas, where the antenna switching switch is disposed on each antenna interface in at least one antenna interface, and the antenna switching switch is configured to switch a target antenna connected to the antenna interface.

The antenna switching method includes the following steps S1310 to S1330:
S1310: Indicate the antenna switching switch to separately connect to the plurality of antennas when a preset condition is met, to obtain received signal strengths of the plurality of antennas.

The preset condition may include one or more of the following: a running state of a target application is freezing, a network latency of the target application is greater than a preset latency threshold, and the target application is in a started state. For example, if a target application A is in a started state, it may be considered that the target application A meets the preset condition. For another example, if a running state of a target application B is freezing, it may be considered that the target application B meets the preset condition. For still another example, if a target application C is in a started state, and a network latency of the target application C is greater than the preset latency threshold, it may be considered that the target application C meets the preset condition.

In some embodiments, the antenna switching method may be applied to a controller. The controller may include a WiTAS monitoring module. In some examples, as shown in FIG. 12, the controller may monitor running data of the application by using the WiTAS monitoring module. An electronic device may indicate, based on current running statuses of some specified applications in the electronic device, the antenna switching switch to separately connect to a plurality of antennas, to ensure measurement of the received signal strength of each antenna.

In some examples, the specified applications may be set by a user, or may be determined by the electronic device based on a preset rule.

For example, as shown in FIG. 12 and an embodiment related to FIG. 12, the WiTAS module in an idle state may monitor applications, to change from the idle state to a transiton state when a target application meets the preset condition, to perform an action 2, so as to indicate the antenna switching switch to separately connect to the plurality of antennas, thereby obtaining received signal strengths of the plurality of antennas.

In some embodiments, the wireless communication module may be configured to measure and output the received signal strength of each antenna connected to the antenna switching switch. In this case, when the received signal strengths of the antennas are measured, the wireless communication module in the wireless network interface controller may be indicated to measure a received signal strength of an antenna connected to the antenna switching switch, and then a measurement result of the wireless communication module is obtained.

In some examples, when the wireless communication module in the wireless network interface controller is indicated to measure the received signal strength of the antenna connected to the antenna switching switch, the wireless communication module may be indicated to measure the received signal strength of the antenna connected to the antenna switching switch within fourth preset duration. For example, the received signal strength of the antenna within 0.5S is measured, to ensure accuracy of the measurement result.

For some embodiments in step S1310, refer to detailed descriptions of the foregoing specific embodiment. Details are not described herein again.

S1320: Determine the target antenna in the plurality of antennas based on the received signal strengths.

In some embodiments, the plurality of antennas include a first antenna and a second antenna. In this case, the target antenna in the plurality of antennas may be determined based on the received signal strengths in the following process. First, a size relationship between a first received signal strength of the first antenna and a second received signal strength of the second antenna may be determined. If the first received signal strength is greater than the second received signal strength, the first antenna is determined as the target antenna. If the first received signal strength is less than the second received signal strength, the second antenna is determined as the target antenna.

In some examples, a difference between the first received signal strength of the first antenna and the second received signal strength of the second antenna may be first determined. If the difference is greater than 0, it may indicate that the first received signal strength is stronger, and the first antenna may be determined as the target antenna. If the difference is less than 0, it may indicate that the second received signal strength is stronger, and the second antenna is determined as the target antenna.

For example, the difference M=RSSI 1-RSSI 2 between the first received signal strength RSSI 1 of the first antenna and the second received signal strength RSSI 2 of the second antenna is calculated. If the difference is greater than 0, it indicates that the first received signal strength RSSI 1 is greater than the second received signal strength RSSI 2, and the first antenna may be used as the target antenna. If the difference is less than 0, it indicates that the first received signal strength RSSI 1 is less than the second received signal strength RSSI 2, and the second antenna may be used as the target antenna.

In some examples, if a quantity of the plurality of antennas is greater than three, any antenna in the plurality of antennas may be selected as the first antenna, and the other antenna are separately used as the second antenna for comparison. After any two antennas in the plurality of antennas are compared, the target antenna may be finally determined. For example, the plurality of antennas include an antenna A, an antenna B, and an antenna C. The antenna A may be first selected as the first antenna, and the antenna B and the antenna C are separately used as the second antenna. For example, the antenna B in the antenna A and the antenna B is selected as the target antenna, and the antenna C in the antenna A and the antenna C is selected as the target antenna. In this case, the antenna B continues to be used as the first antenna, and the antenna C is used as the second antenna. The target antenna selected from the antenna B and the antenna C may be the finally determined target antenna.

Optionally, if the difference between the first received signal strength of the first antenna and the second received signal strength of the second antenna is 0, it indicates that either antenna in the first antenna and the second antenna may be used as the target antenna.

Optionally, received signal strengths of the first antenna and the second antenna may further be obtained for a plurality of times. Values of the obtained plurality of groups of received signal strengths are separately compared, and then the target antenna may be accurately determined based on a comparison result. If the comparison result indicates that the first received signal strength is greater than the second received signal strength for a plurality of times, the first antenna may be determined as the target antenna; or if the comparison result indicates that the first received signal strength is less than the second received signal strength for a plurality of times, the second antenna may be determined as the target antenna. For example, the first received signal strength of the first antenna and the second received signal strength of the second antenna may be obtained for a plurality of times, and a difference between the first received signal strength of the first antenna and the second received signal strength of the second antenna that are obtained each time is calculated. In this case, the first antenna may be determined as the target antenna in response to that the difference is greater than 0 for the m^{th} time, where m is positive integer; or the second antenna may be determined as the target antenna in response to that the difference is less than 0 for the m^{th} time. For example, the first received signal strength of the first antenna obtained for the first time is RSSI 11, the second received signal strength of the second antenna obtained for the first time is RSSI 21, the first received signal strength of the first antenna obtained for the second time is RSSI 12, and the second received signal strength of the second antenna obtained for the second time is RSSI 22. Two differences are obtained through calculation for two test results. M1=RSSI 11-RSSI 21, and M2=RSSI 12-RSSI 22. If m is 2, and M1 and M2 are both greater than 0, it may be considered that the difference is greater than 0 for the m^{th} time, and the first antenna is determined as the target antenna.

S1330: Connect the antenna switching switch to the target antenna.

In some embodiments, the antenna switching switch is connected to the antenna interface configured on the wireless communication module in the wireless network interface controller. The target antenna may be connected to the antenna interface of the wireless communication module by using the antenna switching switch, to implement a connection between the wireless communication module and the target antenna, thereby ensuring that the wireless communication module can receive a wireless signal by using the target antenna. For example, the target antenna is the antenna ANT 3. As shown in FIG. 4, the antenna switching switch is connected to the antenna ANT 2 at the moment. In this case, the terminal a may be connected to the terminal c of the antenna switching switch, to ensure that the target antenna ANT 3 is connected to the antenna interface B of the wireless communication module by using the antenna switching switch SW. For a specific control process of the electronic device on the antenna switching switch, refer to the foregoing embodiment. Details are not described herein again.

In some embodiments, the connection between the antenna switching switch and the target antenna may be controlled based on an absolute value of the difference. In response to that the absolute value of the difference is greater than or equal to a second preset threshold, the antenna switching switch is controlled to switch a connection to the target antenna, and the connection with the target antenna is kept within second preset duration. In response to that the absolute value of the difference is less than the second preset threshold, and the absolute value of the difference is greater than or equal to a first preset threshold, the antenna switching switch is controlled to switch a connection to the target antenna, and the connection with the target antenna is kept within third preset duration. The second preset duration is greater than the third preset duration.

In some embodiments, after the absolute value of the difference is determined, in response to that the absolute value of the difference is less than the first preset threshold, the electronic device may determine that the antenna currently connected to the antenna switching switch is the target antenna, and keep the connection with the target antenna within first preset duration.

For example, the second preset threshold A is 6 dB, the first preset threshold B is 3 dB, the second preset duration A is 60S, the third preset duration B is 30S, and the first preset duration C is 20S. The difference M between the first received signal strength RSSI 1 of the first antenna and the second received signal strength RSSI 2 of the second antenna is RSSI 1-RSSI 2. If M>0, it indicates that the signal strength of the first antenna is stronger, and the first antenna may be set to the target antenna. Next, if |M|≥6, it may be determined that the antenna switching switch no longer performs a switching action within 60S after switching to the first antenna, and keeps the connection with the first antenna. If 3≤|M|<6, it may be determined that the antenna switching switch no longer performs a switching action within 30S after switching to enable the WiFi module to be connected to the first antenna, and keeps the connection with the first antenna. If |M|<3, it may be determined that the antenna switching switch does not need to perform an antenna switching action, and the antenna switching switch no longer performs a switching action within 20S, and keeps the connection with the antenna currently connected to the antenna switching switch. In addition, reference may also be made to the specific embodiment of determining the corresponding target antenna and the corresponding freezing time by the WiTAS module based on whether the difference between received signal strengths of different antennas meets a preset range, and details are not described herein again.

In some embodiments, the controller includes a wireless transmitting antenna selection WiTAS module. The controller may determine, by using the WiTAS module in a first state (for example, the idle state in FIG. 12), whether a current case meets a preset condition (for example, the action 1 in FIG. 12). If determining, by using the WiTAS module in the first state, that the current case meets the preset condition (for example, a change condition 1 in FIG. 12), the controller controls the WiTAS module to change from the first state to a second state (for example, a transition state in FIG. 12). The WiTAS module in the second state determines whether the current case meets the preset condition, and indicates the antenna switching switch to separately connect to the plurality of antennas, to obtain the received signal strengths of the plurality of antennas, and determines the target antenna in the plurality of antennas based on the received signal strengths (for example, the action 2 in FIG. 12). If the WiTAS module in the second state determines that the current case meets the preset condition, and determines the target antenna (for example, a change condition 3 in FIG. 12), the WiTAS module is controlled to change from the second state to a third state (for example, the steady state in FIG. 12). The controller connects, by using the WiTAS module in the third state, the antenna switching switch to the target antenna (for example, an action 3 in FIG. 12).

In some examples, if the WiTAS module in the second state determines that the current case does not meet the preset condition (for example, the change condition 2 in FIG. 12), the WiTAS module is controlled to change from the second state to the first state.

In some examples, after connecting, by using the WiTAS module in the third state, the antenna switching switch to the target antenna, the controller determines, by using the WiTAS module in the third state, whether the current case meets the preset condition (for example, the action 3 in FIG. 12). If the WiTAS module in the third state determines that the current case meets the preset condition (for example, a change condition 4 in FIG. 12), the controller controls the WiTAS module to change from the third state to the second state.

In some examples, after connecting, by using the WiTAS module in the third state, the antenna switching switch to the target antenna, the controller determines, by using the WiTAS module in the third state, whether the current case meets the preset condition (for example, the action 3 in FIG. 12). For example, the WiTAS module in the third state cannot determine whether the current case meets the preset condition (for example, a change condition 5 in FIG. 12), where the preset condition is that a target application is in a freezing state, or the like. If the WiTAS module in the third state cannot determine whether the current case meets the preset condition, it indicates that the target application is not in a running state, and the controller may control the WiTAS module to change from the third state to the first state.

In some examples, after connecting, by using the WiTAS module in the third state, the antenna switching switch to the target antenna, the controller determines, by using the WiTAS module in the third state, whether the current case meets the preset condition (for example, the action 3 in FIG. 12). If the WiTAS module in the third state determines that the current case does not meet the preset condition (for example, a change condition 6 in FIG. 12), the controller controls the WiTAS module to keep the third state.

In this way, embodiments of this application provide a wireless network interface controller. The antenna switching switch in the wireless network interface controller may switch between the antennas connected to the wireless communication module. When one of the plurality of antennas is blocked in receiving and sending wireless signals, the remaining antennas may still normally receive and send wireless signals, and the anti-interference capability of the wireless network interface controller is also improved. In addition, it can also be ensured, by using the plurality of antennas, that there is no dead zone for wireless signal receiving or sending, so that the coverage rate of wireless signals can be increased.

In an antenna switching method provided in embodiments of this application, the antenna switching switch is configured in the wireless network interface controller of the electronic device, and the wireless network interface controller increases a quantity of connectable antennas by using the antenna switching switch, to ensure a signal coverage rate of the wireless network interface controller. In this method, suitable antennas may also be selected by controlling the wireless switching switch when the preset condition is met, so that communication performance of the electronic device can be effectively improved. By using the wireless network interface controller and the antenna switching method provided in embodiments of this application, on the basis that a quantity of antenna interfaces of the wireless communication module included in the wireless network interface controller is small, the wireless communication module can be enabled to achieve same communication effect as a wireless communication module with a large quantity of antenna interfaces, to ensure that the product cost does not increase or an increasing amplitude is small when the communication effect is improved.

This application further provides an antenna switching apparatus. The antenna switching apparatus is configured to perform the foregoing antenna switching methods.

In some embodiments, the antenna switching apparatus may be the electronic device shown in FIG. 3. For another example, the antenna switching apparatus may be a controller, for example, the processor in FIG. 3.

In some embodiments, the antenna switching apparatus further includes the wireless network interface controller in the foregoing embodiment.

In this way, the antenna switching apparatus may determine a running state of a target application, and when the target application meets a preset condition, indicate an antenna switching switch in the wireless network interface controller to separately connect to a plurality of antennas, to obtain received signal strengths of the plurality of antennas. Then, the antenna switching apparatus may control the wireless switching switch to select suitable antennas, so that communication performance of the antenna switching apparatus can be effectively improved.

The antenna switching methods provided in embodiments of this application are described above in detail with reference to FIG. 4 to FIG. 13. The following describes, in detail with FIG. 14, an electronic device according to an embodiment of this application.

In a possible design, FIG. 14 is a diagram of a structure of an electronic device according to an embodiment of this application. As shown in FIG. 14, the electronic device 1400 may include a processing unit 1401 and a transceiver unit 1402. The electronic device 1400 may be configured to implement functions of the electronic device in the foregoing method embodiments.

Optionally, the processing unit 1401 is configured to support the electronic device 1400 in performing S1001 to S1013 in FIG. 10, and is further configured to support the electronic device 1400 in performing S1310 to S1330 in FIG. 13.

Optionally, the transceiver unit 1402 is configured to support the electronic device 1400 in performing S1001 to S1013 in FIG. 10, and is further configured to support the electronic device 1400 in performing S1310 to S1330 in FIG. 13.

The transceiver unit may include a receiving unit and a sending unit, may be implemented by a transceiver or a transceiver-related circuit assembly, and may be a transceiver or a transceiver module. Operations and/or functions of the units in the electronic device 1400 are respectively used for implementing corresponding procedures of the antenna switching methods in the foregoing method embodiments. All related content of the steps in the foregoing method embodiments may be referenced to function descriptions of corresponding functional units. For brevity, details are not described herein again.

Optionally, the electronic device 1400 shown in FIG. 14 may further include a storage unit (not shown in FIG. 14), and the storage unit stores a program or instructions. When the processing unit 1401 and the transceiver unit 1402 execute the program or the instructions, the electronic device 1400 shown in FIG. 14 is enabled to execute the antenna switching methods in the foregoing method embodiments.

For technical effects of the electronic device 1400 shown in FIG. 14, refer to the technical effects of the antenna switching methods in the foregoing method embodiments. Details are not described herein again.

In addition to being implemented in a form of the electronic device 1400, the technical solution provided in this embodiment of this application may alternatively be implemented by a functional unit or a chip in the electronic device, or an apparatus used in a matching manner with the electronic device.

An embodiment of this application further provides a computer-readable storage medium. The computer storage medium includes computer instructions. When the computer instructions are run on the foregoing electronic device, the electronic device is enabled to perform the functions or steps in the foregoing method embodiments.

An embodiment of this application further provides a computer program product, including a computer program. When the computer program is run on an electronic device, the electronic device is enabled to perform the functions or steps in the foregoing method embodiments.

Based on the descriptions of the foregoing implementations, a person skilled in the art may clearly understand that, for a purpose of convenient and brief description, division into the foregoing functional modules is used as an example for illustration. In actual application, the foregoing functions may be allocated to different functional modules and completed based on requirements. In other words, an inner structure of an apparatus is divided into different functional modules to complete all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An antenna switching method, wherein the method is used for performing switching control on antennas in a wireless network interface controller, and the wireless network interface controller comprises a wireless communication module, an antenna switching switch, and the antennas; and an antenna interface is disposed on the wireless communication module, and the antenna interface is configured to connect to the antennas, wherein the antenna switching switch is disposed on each antenna interface in at least one antenna interface, and the antenna switching switch is configured to switch a target antenna connected to the antenna interface; and
the method comprises:
indicating the antenna switching switch to separately connect to each antenna in the plurality of antennas when a preset condition is met, to obtain received signal strengths of the plurality of antennas;
determining the target antenna in the plurality of antennas based on the received signal strengths; and
connecting the antenna switching switch to the target antenna.

2. The method according to claim 1, wherein the plurality of antennas comprise a first antenna and a second antenna, and the determining the target antenna in the plurality of antennas based on the received signal strengths comprises:
determining a size relationship between a first received signal strength of the first antenna and a second received signal strength of the second antenna; and
determining the first antenna as the target antenna in response to that the first received signal strength is greater than the second received signal strength; or
determining the second antenna as the target antenna in response to that the first received signal strength is less than the second received signal strength.

3. The method according to claim 1, wherein the plurality of antennas comprise a first antenna and a second antenna, and the determining the target antenna in the plurality of antennas based on the received signal strengths comprises:
in response to that an absolute value of a difference between a first received signal strength of the first antenna and a second received signal strength of the second antenna is less than a first preset threshold, determining an antenna currently connected to the antenna switching switch as the target antenna, and keeping a connection with the target antenna within first preset duration.

4. The method according to claim 2 or 3, wherein the connecting the antenna switching switch to the target antenna comprises:
in response to that the absolute value of the difference between the first received signal strength and the second received signal strength is greater than or equal to a second preset threshold, controlling the antenna switching switch to switch a connection to the target antenna, and keeping the connection with the target antenna within second preset duration; or
in response to that the absolute value of the difference between the first received signal strength and the second received signal strength is less than the second preset threshold, and the absolute value of the difference is greater than or equal to the first preset threshold, controlling the antenna switching switch to switch a connection to the target antenna, and keeping the connection with the target antenna within third preset duration, wherein the second preset duration is greater than the third preset duration.

5. The method according to any one of claims 1 to 3, wherein the wireless communication module is configured to measure and output a received signal strength of the antenna connected to the antenna switching switch.

6. The method according to any one of claims 1 to 3, wherein the preset condition comprises one or more of the following: a running state of a target application is freezing, a network latency of the target application is greater than a preset latency threshold, and the target application is in a started state.

7. The method according to claim 1, wherein the method is applied to a controller, the controller is connected to the wireless network interface controller, and the controller is configured to perform switching control on the antenna switching switch based on the received signal strengths of the plurality of antennas; and the controller comprises a wireless transmitting antenna selection WiTAS module;
the indicating the antenna switching switch to separately connect to each antenna in the plurality of antennas when a preset condition is met, to obtain received signal strengths of the plurality of antennas comprises:
determining, by using the WiTAS module in a first state, whether a current case meets the preset condition;
changing, by the WiTAS module, from the first state to a second state in response to that the current case meets the preset condition; and
determining, by using the WiTAS module in the second state, whether the current case meets the preset condition, and indicating the antenna switching switch to separately connect to the plurality of antennas, to obtain the received signal strengths of the plurality of antennas;
the determining the target antenna in the plurality of antennas based on the received signal strengths comprises:
determining, by using the WiTAS module in the second state, the target antenna in the plurality of antennas based on the received signal strengths; and
the connecting the antenna switching switch to the target antenna comprises:
changing, by the WiTAS module, from the second state to a third state in response to that the current case meets the preset condition and that the target antenna has been determined, and connecting, by using the WiTAS module in the third state, the antenna switching switch to the target antenna.

8. A wireless network interface controller, comprising: a wireless communication module, an antenna switching switch, and antennas, wherein
an antenna interface is disposed on the wireless communication module, and the antenna interface is configured to connect to the antennas, wherein
the antenna switching switch is disposed on each antenna interface in at least one antenna interface, and the antenna switching switch is configured to switch a target antenna connected to the antenna interface; and the target antenna is determined based on received signal strengths of all antennas connected to the antenna switching switch.

9. The wireless network interface controller according to claim 8, wherein the wireless communication module is configured to measure and output a received signal strength of each antenna connected to the antenna switching switch.

10. The wireless network interface controller according to claim 8 or 9, wherein a radiation type of the antenna is a directional antenna or an omnidirectional antenna.

11. An antenna switching apparatus, wherein the antenna switching apparatus is configured to perform the method according to any one of claims 1 to 7.

12. An antenna switching apparatus, wherein the antenna switching apparatus comprises a controller and the wireless network interface controller according to any one of claims 8 to 10.

13. A computer-readable storage medium, comprising computer instructions, wherein when the computer instructions are run on an electronic device, the electronic device is enabled to perform the method according to any one of claims 1 to 7.

14. An antenna switching method, wherein the method is used for performing switching control on antennas in a wireless network interface controller, and the wireless network interface controller comprises a wireless communication module, an antenna switching switch, and the antennas; and an antenna interface is disposed on the wireless communication module, and the antenna interface is configured to connect to the antennas, wherein the antenna switching switch is disposed on each antenna interface in at least one antenna interface, and the antenna switching switch is configured to switch a target antenna connected to the antenna interface; and
the method comprises:
indicating the antenna switching switch to separately connect to each antenna in the plurality of antennas when a preset condition is met, to obtain received signal strengths of the plurality of antennas, wherein the plurality of antennas comprise a first antenna and a second antenna;
determining the target antenna in the plurality of antennas based on the received signal strengths; and
connecting the antenna switching switch to the target antenna, wherein
the connecting the antenna switching switch to the target antenna comprises:
in response to that an absolute value of a difference between a first received signal strength of the first antenna and a second received signal strength of the second antenna is greater than or equal to a second preset threshold, controlling the antenna switching switch to switch a connection to the target antenna, and keeping the connection with the target antenna within second preset duration; or
in response to that the absolute value of the difference between the first received signal strength and the second received signal strength is less than the second preset threshold, and the absolute value of the difference is greater than or equal to a first preset threshold, controlling the antenna switching switch to switch a connection to the target antenna, and keeping the connection with the target antenna within third preset duration, wherein the second preset duration is greater than the third preset duration.

15. The method according to claim 14, wherein the determining the target antenna in the plurality of antennas based on the received signal strengths comprises:
determining a size relationship between the first received signal strength of the first antenna and the second received signal strength of the second antenna; and
determining the first antenna as the target antenna in response to that the first received signal strength is greater than the second received signal strength; or
determining the second antenna as the target antenna in response to that the first received signal strength is less than the second received signal strength.

16. The method according to claim 14, wherein the determining the target antenna in the plurality of antennas based on the received signal strengths comprises:
in response to that the absolute value of the difference between the first received signal strength of the first antenna and the second received signal strength of the second antenna is less than the first preset threshold, determining an antenna currently connected to the antenna switching switch as the target antenna, and keeping a connection with the target antenna within first preset duration.

17. The method according to any one of claims 14 to 16, wherein the wireless communication module is configured to measure and output a received signal strength of the antenna connected to the antenna switching switch.

18. The method according to any one of claims 14 to 16, wherein the preset condition comprises one or more of the following: a running state of a target application is freezing, a network latency of the target application is greater than a preset latency threshold, and the target application is in a started state.

19. The method according to claim 14, wherein the method is applied to a controller, the controller is connected to the wireless network interface controller, and the controller is configured to perform switching control on the antenna switching switch based on the received signal strengths of the plurality of antennas; and the controller comprises a wireless transmitting antenna selection WiTAS module;
the indicating the antenna switching switch to separately connect to each antenna in the plurality of antennas when a preset condition is met, to obtain received signal strengths of the plurality of antennas comprises:
determining, by using the WiTAS module in a first state, whether a current case meets the preset condition;
changing, by the WiTAS module, from the first state to a second state in response to that the current case meets the preset condition; and
determining, by using the WiTAS module in the second state, whether the current case meets the preset condition, and indicating the antenna switching switch to separately connect to the plurality of antennas, to obtain the received signal strengths of the plurality of antennas;
the determining the target antenna in the plurality of antennas based on the received signal strengths comprises:
determining, by using the WiTAS module in the second state, the target antenna in the plurality of antennas based on the received signal strengths; and
the connecting the antenna switching switch to the target antenna further comprises:
changing, by the WiTAS module, from the second state to a third state in response to that the current case meets the preset condition and that the target antenna has been determined, and connecting, by using the WiTAS module in the third state, the antenna switching switch to the target antenna.
